# EUROPEAN PATENT APPLICATION

(11) **EP 4 648 392 A1**
(43) Date of publication of application: **12.11.2025**
(21) Application number: 23915784.5
(22) Date of filing: 18.12.2023
(51) Int. Cl.: H04L 69/24

(54) **COMMUNICATION METHOD AND COMMUNICATION APPARATUS**

(30) Priority: 14.01.2023 CN 202310200015; 28.04.2023 CN 202310491401
(71) Applicant: Huawei Technologies Co., Ltd., Shenzhen, Guangdong 518129 (CN)
(72) Inventor: DOU, Fenghui, Shenzhen, Guangdong 518129 (CN); ZHANG, Yanqing, Shenzhen, Guangdong 518129 (CN)
(74) Representative: Körber, Martin Hans
(86) International application number: PCT/CN2023/139633
(87) International publication number: WO 2024/149030

(57) **Abstract**

This application provides a communication method and a communication apparatus. In the method, if a protocol corresponding to a first data flow matches a first protocol, a PDU session for transmission of the first data flow may be determined based on a first route selection parameter. The PDU session determined for the first data flow is applicable to the first protocol, so that the determined PDU session can be for better transmission of the first data flow. In this way, user experience can be improved.

## Description

This application claims priorities to Chinese Patent Application No. 202310200015.1, filed with the China National Intellectual Property Administration on January 14, 2023 and entitled "ROUTE PARAMETER DETERMINING METHOD AND APPARATUS", and to Chinese Patent Application No. 202310491401.0, filed with the China National Intellectual Property Administration on April 28, 2023 and entitled "COMMUNICATION METHOD and COMMUNICATION APPARATUS", both of which are incorporated herein by reference in their entireties.

### TECHNICAL FIELD

This application relates to the communication field, and more specifically, to a communication method and a communication apparatus.

### BACKGROUND

A terminal device may establish a protocol data unit (protocol data unit, PDU) session with a network device, and perform data transmission by using the established PDU session. In a conventional technology, the terminal device may establish the PDU session by using a route selection parameter. However, the route selection parameter selected by the terminal device may not be a good parameter, and user experience may be affected.

### SUMMARY

Embodiments of this application provide a communication method and a communication apparatus, to improve user experience.

According to a first aspect, a communication method is provided, and includes: receiving, from a first network device, a first route selection parameter of a data flow corresponding to a first protocol; obtaining a protocol corresponding to a first data flow; and if the protocol corresponding to the first data flow matches the first protocol, determining, based on the first route selection parameter, a PDU session for transmission of the first data flow, where the first protocol belongs to a transport layer protocol or an application layer protocol.

In the foregoing solution, if the protocol corresponding to the first data flow matches the first protocol, the PDU session for transmission of the first data flow may be determined based on the first route selection parameter. The PDU session determined for the first data flow is applicable to the first protocol, so that the determined PDU session can be for better transmission of the first data flow. In this way, user experience can be improved.

Optionally, the determining, based on the first route selection parameter, the PDU session for transmission of the first data flow may be: establishing, based on the first route selection parameter, the PDU session for transmission of the first data flow, or selecting, based on the first route selection parameter, a PDU session that has been already established and that is for transmission of the first data flow. In other words, the PDU session for transmission of the first data flow may be a newly established PDU session or a PDU session that has been already established.

Optionally, that the protocol corresponding to the first data flow matches the first protocol may include: The protocol corresponding to the first data flow is the first protocol.

Optionally, the foregoing communication method may be performed by a terminal device.

Optionally, the first network device may be a policy control network element.

In some possible implementations, the communication method further includes: receiving first indication information from the first network device, where the first indication information indicates the first protocol. Optionally, when the first network device is a policy control network element, the receiving the first indication information from the first network device includes: receiving the first indication information from the policy control network element via an access and mobility management network element.

Optionally, the first indication information may directly or indirectly indicate the first protocol.

In some possible implementations, the receiving the first indication information from the first network device includes: receiving a first route selection policy from the first network device, where the first route selection policy includes the first indication information.

In the foregoing solution, the first route selection policy sent by the first network device may include the first indication information, and the terminal device may establish a PDU session according to the first route selection policy.

In some possible implementations, the first route selection parameter includes a first parameter, and the first parameter indicates that transmission of a data flow is performed via a plurality of PDU sessions.

In the foregoing solution, the terminal device may determine, based on the first parameter, to perform transmission of the first data flow via the plurality of PDU sessions. In this way, reliability of transmission of the first data flow can be improved.

In some possible implementations, the first parameter further indicates a first manner of transmission of the data flow via the plurality of PDU sessions, and the first manner is a switching manner or an aggregation manner; and
the determining, based on the first route selection parameter, the PDU session for transmission of the first data flow includes:
sending a PDU session establishment request message to a second network device based on the first route selection parameter, to establish a plurality of PDU sessions, where the plurality of PDU sessions are for transmission of the first data flow in the first manner.

In the foregoing solution, the terminal device may send the PDU session establishment request message based on the first route selection parameter, to establish the PDU session for transmission of the first data flow. The first parameter in the first route selection parameter indicates the first manner of transmission of the data flow via the plurality of PDU sessions. In this way, if the protocol corresponding to the first data flow matches the first protocol, the terminal device can perform transmission of the first data flow in the first manner, to improve reliability.

Optionally, if the first manner is the aggregation manner, the PDU session establishment request message may include indication information indicating the aggregation manner. In this way, the second network device that receives the PDU session establishment request message can aggregate data on the plurality of PDU sessions based on the indication information indicating the aggregation manner.

Optionally, if the first manner is the switching manner, the PDU session establishment request message may include or not include indication information indicating the switching manner.

Optionally, when the first parameter indicates that transmission of the data flow is performed via the plurality of PDU sessions, and the first parameter indicates the first manner of transmission of the data flow via the plurality of PDU sessions, there may be a same parameter indicating that transmission of the data flow is performed via the plurality of PDU sessions and the first manner of transmission of the data flow via the plurality of PDU sessions, or there may be different parameters respectively indicating that transmission of the data flow is performed via the plurality of PDU sessions and the first manner of transmission of the data flow via the plurality of PDU sessions.

In some possible implementations, the determining, based on the first route selection parameter, the PDU session for transmission of the first data flow includes: sending a PDU session establishment request message to a second network device, where the PDU session establishment request message includes second indication information, and the second indication information indicates that transmission of the first data flow is performed via a plurality of PDU sessions; receiving a response message of the PDU session establishment request message from the second network device, where the response message of the PDU session establishment request message includes third indication information, the third indication information indicates a first manner of transmission of the first data flow via the plurality of PDU sessions, and the first manner is a switching manner or an aggregation manner; and establishing the plurality of PDU sessions based on the third indication information, where the plurality of PDU sessions are for transmission of the first data flow in the first manner.

In the foregoing solution, if the protocol corresponding to the first data flow matches the first protocol, the terminal device may receive, from the first network device, the first parameter in the first route selection policy, determine to perform transmission of the first data flow via the plurality of PDU sessions, and include, when sending the PDU session establishment request message to the second network device, the second indication information indicating that transmission of the first data flow is performed via the plurality of PDU sessions. The second network device may determine, based on the second indication information, the first manner of transmission of the first data flow by the terminal device via the plurality of PDU sessions, and include, in the response message of the PDU session establishment request message, the third indication information indicating the first manner. The terminal device may establish the plurality of PDU sessions based on the third indication information, where the plurality of PDU sessions are for transmission of the first data flow in the first manner.

In some possible implementations, the communication method further includes: if the first manner is the switching manner, performing transmission of the first data flow by switching between the plurality of PDU sessions based on session quality of the plurality of PDU sessions.

In the foregoing solution, the terminal device may perform transmission of the first data flow by switching between the plurality of PDU sessions based on the session quality of the plurality of PDU sessions, so that reliability of transmission of the first data flow can be improved.

Optionally, the performing transmission of the first data flow by switching between the plurality of PDU sessions based on session quality of the plurality of PDU sessions includes: selecting a PDU session with good session quality from the plurality of PDU sessions to perform transmission of the first data flow, and skipping performing transmission of the first data flow on a remaining PDU session. In this way, reliability of transmission of the first data flow can be improved.

In some possible implementations, the communication method further includes: if the first manner is the aggregation manner, performing transmission of a part of data of the first data flow on a part of the plurality of PDU sessions, and performing transmission of a remaining part of data of the first data flow on a remaining part of the plurality of PDU sessions.

In the foregoing solution, if the first manner is the aggregation manner, the terminal device may route data of the first data flow to the plurality of PDU sessions. In this way, reliability of transmission of the first data flow can be improved.

In some possible implementations, if the first protocol includes a quick user datagram protocol internet connection QUCI protocol, the first manner is the switching manner.

In the foregoing solution, if the first protocol includes the QUCI, because a CID is introduced in the QUIC, transmission of the first data flow is not affected as a network changes, and even if switching between a plurality of PDU sessions for use is performed, service continuity can be ensured. Therefore, a manner of transmission of the first data flow via the plurality of PDU sessions can be the switching manner.

In some possible implementations, if the first protocol is a datagram protocol UDP or a transmission control protocol TCP, the first manner is the aggregation manner.

In the foregoing solution, the first protocol is the UDP or the TCP. In this case, switching a PDU session causes service interruption. Therefore, to avoid the service interruption, a manner of transmission of the first data flow via the plurality of PDU sessions can be the aggregation manner.

In some possible implementations, the first route selection parameter includes a session and service continuity SSC mode.

In some possible implementations, if the first protocol includes the quick user datagram protocol internet connection QUCI protocol, the SSC mode is a mode 3 or a mode 1.

In the foregoing solution, if the first protocol includes the QUCI, due to connection migration of the QUCI, even if a PDU session is switched, the service continuity is not affected. Therefore, the SSC mode can be the mode 3 or the mode 1.

In some possible implementations, if the first protocol is the UDP or the TCP, the SSC mode is a mode 1.

In the foregoing solution, if the first protocol is the TCP or the UDP, switching of a PDU session may cause service interruption. Therefore, it can be determined that the SSC mode corresponding to a first application is the mode 1.

Optionally, the first route selection parameter may include the SSC mode and/or the first parameter.

In some possible implementations, the first route selection policy sent by the first network device includes the first route selection parameter.

In some possible implementations, the first data flow is a data flow corresponding to a first application.

In the foregoing solution, when initiating the first data flow corresponding to the first application, the terminal device may obtain the protocol corresponding to the first data flow, and if the protocol corresponding to the first data flow of the first application matches the first protocol, may determine, based on the first route selection parameter, a PDU session for transmission of the first data flow.

According to a second aspect, a communication method is provided, and includes: determining a first route selection parameter of a data flow corresponding to a first protocol; and sending the first route selection parameter, where the first route selection parameter is used to determine a PDU session, where the first protocol belongs to a transport layer protocol or an application layer protocol.

In the foregoing solution, the first route selection parameter of the data flow corresponding to the first protocol may be determined, and the first route selection parameter may be sent. In this way, if a terminal device determines that a protocol corresponding to a first data flow matches the first protocol, the terminal device can determine, based on the first route selection parameter, a PDU session for transmission of the first data flow. In this way, the PDU session determined for the first data flow is applicable to the first protocol, so that the determined PDU session can be for better transmission of the first data flow. In this way, user experience can be improved.

Optionally, the foregoing method may be performed by a first network device.

Optionally, the first network device may be a policy control network element.

In some possible implementations, the communication method further includes: sending first indication information indicative of the first protocol.

In some possible implementations, the sending the first indication information includes:
sending a first route selection policy including the first indication information.

In some possible implementations, the first route selection policy includes a first parameter, and the first parameter indicates that transmission of a data flow is performed via a plurality of PDU sessions.

In some possible implementations, the first parameter further indicates a first manner of transmission of the data flow via the plurality of PDU sessions, and the first manner is a switching manner or an aggregation manner.

In some possible implementations, the determining the first route selection parameter of the data flow corresponding to the first protocol includes:
if the first protocol includes a quick user datagram protocol internet connection QUCI, determining that the first parameter indicates that the first manner of transmission of the data flow via the plurality of PDU sessions is the switching manner.

In the foregoing solution, if the first protocol includes the QUCI, because a CID is introduced in the QUIC, transmission of a first data flow is not affected as a network changes, and even if switching between a plurality of PDU sessions for use is performed, service continuity can be ensured. Therefore, it can be determined that a manner of transmission of the first data flow via a plurality of PDU sessions can be the switching manner.

In some possible implementations, the determining the first route selection parameter of the data flow corresponding to the first protocol includes: if the first protocol is a datagram protocol UDP or a transmission control protocol TCP, determining that the first parameter indicates that the first manner of transmission of the data flow via the plurality of PDU sessions is the aggregation manner.

In the foregoing solution, the first protocol is the UDP or the TCP. In this case, switching a PDU session causes service interruption. Therefore, to avoid the service interruption, a manner of transmission of a first data flow via a plurality of PDU sessions can be the aggregation manner.

In some possible implementations, the first route selection parameter includes a session and service continuity SSC mode.

In some possible implementations, the determining the first route selection parameter of the data flow corresponding to the first protocol includes:
if the data flow corresponding to the first protocol has a session and service continuity requirement and the first protocol includes the QUCI protocol, determining that the SSC mode in the first route selection parameter of the data flow corresponding to the first protocol is a mode 3 or a mode 1.

In the foregoing solution, if the data flow corresponding to the first protocol has the session and service continuity requirement and the first protocol includes the QUCI, due to connection migration of the QUCI, even if a PDU session is switched, the session and service continuity is not affected. Therefore, the SSC mode can be the mode 3 or the mode 1.

In some possible implementations, the determining the first route selection parameter of the data flow corresponding to the first protocol includes: if the first protocol includes the quick user datagram protocol internet connection QUCI protocol, determining that the SSC mode in the first route selection parameter of the data flow corresponding to the first protocol is a mode 3 or a mode 1.

In the foregoing solution, if the first protocol includes the QUCI, due to connection migration of the QUCI, even if a PDU session is switched, the session and service continuity is not affected. Therefore, the SSC mode can be the mode 3 or the mode 1.

In some possible implementations, the determining the first route selection parameter of the data flow corresponding to the first protocol includes: if the data flow corresponding to the first protocol has a session and service continuity requirement and the first protocol is the UDP or the TCP, determining that the SSC mode in the first route selection parameter of the data flow corresponding to the first protocol is a mode 1.

In the foregoing solution, if the data flow corresponding to the first protocol has the session and service continuity requirement and the first protocol is the TCP or the UDP, switching the PDU session may cause service interruption. Therefore, it can be determined that the SSC mode is the mode 1.

In some possible implementations, the determining a first route selection parameter corresponding to the first application includes: if the first protocol is the UDP or the TCP, determining that the SSC mode in the first route selection parameter of the data flow corresponding to the first protocol is a mode 1.

In the foregoing solution, if the first protocol is the TCP or the UDP, switching the PDU session may cause service interruption. Therefore, it can be determined that the SSC mode is the mode 1.

In some possible implementations, the first route selection policy sent by the first network device includes the first route selection parameter.

In some possible implementations, the data flow corresponding to the first protocol is a data flow corresponding to a first application.

Specifically, for descriptions of the second aspect, refer to the descriptions of the first aspect.

According to a third aspect, a communication method is provided, and includes: receiving a first parameter from a first network device, where the first parameter indicates that transmission of a data flow is performed via a plurality of PDU sessions; and sending a PDU session establishment request message to a second network device based on the first parameter, to establish the plurality of PDU sessions, where the plurality of PDU sessions are for transmission of a first data flow.

In the foregoing solution, the first parameter received from the first network device may indicate that transmission of the data flow is performed via the plurality of PDU sessions, and the PDU session establishment request message may be sent to the second network device based on the first parameter. In this way, the plurality of established PDU sessions are for transmission of the first data flow, thereby improving reliability of transmission of the first data flow.

Optionally, the sending a PDU session establishment request message to a second network device based on the first parameter includes: separately sending a plurality of PDU session establishment request messages to the second network device based on the first parameter, where one PDU session establishment request message corresponds to one PDU session. In this way, a plurality of PDU sessions can be established based on the plurality of PDU session establishment request messages.

Optionally, the foregoing method is performed by a terminal device.

In some possible implementations, the first parameter further indicates a first manner of transmission of the data flow via the plurality of PDU sessions, the first manner is a switching manner or an aggregation manner, and the plurality of PDU sessions are for transmission of the first data flow in the first manner.

In the foregoing solution, the first parameter sent by the first network device may indicate the first manner of transmission of the data flow via the plurality of PDU sessions. In this way, the terminal device can perform transmission of the first data flow in the first manner, to improve reliability.

Optionally, when the first parameter indicates that transmission of the data flow is performed via the plurality of PDU sessions, and the first parameter indicates the first manner of transmission of the data flow via the plurality of PDU sessions, there may be a same parameter indicating that transmission of the data flow is performed via the plurality of PDU sessions and the first manner of transmission of the data flow via the plurality of PDU sessions, or there may be different parameters respectively indicating that transmission of the data flow is performed via the plurality of PDU sessions and the first manner of transmission of the data flow via the plurality of PDU sessions.

Optionally, if the first manner is the aggregation manner, the PDU session establishment request message may include indication information indicating the aggregation manner. In this way, the second network device that receives the PDU session establishment request message can aggregate data on the plurality of PDU sessions based on the indication information indicating the aggregation manner.

Optionally, if the first manner is the switching manner, the PDU session establishment request message may include or not include indication information indicating the switching manner.

In some possible implementations, the PDU session establishment request message includes second indication information, and the second indication information indicates that transmission of the first data flow is performed via a plurality of PDU sessions;
receiving a response message of the PDU session establishment request message from the second network device, where the response message of the PDU session establishment request message includes third indication information, the third indication information indicates a first manner of transmission of the first data flow via the plurality of PDU sessions, and the first manner is a switching manner or an aggregation manner; and establishing the plurality of PDU sessions based on the third indication information, where the plurality of PDU sessions are for transmission of the first data flow in the first manner.

In the foregoing solution, the terminal device may determine, based on the first parameter, to perform transmission of the first data flow via the plurality of PDU sessions, and include, when sending the PDU session establishment request message to the second network device, the second indication information indicating that transmission of the first data flow is performed via the plurality of PDU sessions. The second network device may determine, based on the second indication information, the first manner of transmission of the first data flow by the terminal device via the plurality of PDU sessions, and include, in the response message of the PDU session establishment request message, the third indication information indicating the first manner. The terminal device may establish the plurality of PDU sessions based on the third indication information, where the plurality of PDU sessions are for transmission of the first data flow in the first manner.

In some possible implementations, the communication method further includes: if the first manner is the switching manner, performing transmission of the first data flow by switching between the plurality of PDU sessions based on session quality of the plurality of PDU sessions.

In the foregoing solution, the terminal device may perform transmission of the first data flow by switching between the plurality of PDU sessions based on the session quality of the plurality of PDU sessions, so that reliability of transmission of the first data flow can be improved.

Optionally, the performing transmission of the first data flow by switching between the plurality of PDU sessions based on session quality of the plurality of PDU sessions includes: selecting a PDU session with good session quality from the plurality of PDU sessions to perform transmission of the first data flow, and skipping performing transmission of the first data flow on a remaining PDU session. In this way, reliability of transmission of the first data flow can be improved.

In some possible implementations, the communication method further includes: if the first manner is the aggregation manner, performing transmission of a part of data of the first data flow on a part of the plurality of PDU sessions, and performing transmission of a remaining part of data of the first data flow on a remaining part of the plurality of PDU sessions.

In the foregoing solution, if the first manner is the aggregation manner, the terminal device may route data of the first data flow to the plurality of PDU sessions. In this way, reliability of transmission of the first data flow can be improved.

In some possible implementations, the receiving a first parameter from a first network device includes: receiving a first route selection policy from the first network device, where the first route selection policy includes the first parameter.

In some possible implementations, the first data flow is a data flow corresponding to a first application.

In the foregoing solution, when initiating the first data flow corresponding to the first application, the terminal device may obtain a protocol corresponding to the first data flow, and if the protocol corresponding to the first data flow of the first application matches the first protocol, may determine, based on the first route selection parameter, a PDU session for transmission of the first data flow.

According to a fourth aspect, a communication method is provided, and includes: determining a first parameter, where the first parameter indicates that transmission of a data flow is performed via a plurality of PDU sessions; and sending the first parameter.

In the foregoing solution, the first parameter may indicate that transmission of the data flow is performed via the plurality of PDU sessions. In this way, a terminal device can send a PDU session establishment request message to a second network device based on the first parameter. In this way, a plurality of established PDU sessions are for transmission of a first data flow, thereby improving reliability of transmission of the first data flow.

In some possible implementations, the first parameter further indicates a first manner of transmission of the data flow via the plurality of PDU sessions, the first manner is a switching manner or an aggregation manner, and the plurality of PDU sessions are for transmission of the first data flow in the first manner.

In some possible implementations, receiving the first parameter from a first network device includes: receiving a first route selection policy from the first network device, where the first route selection policy includes the first parameter.

In some possible implementations, the data flow is a data flow corresponding to a first application.

According to a fifth aspect, an embodiment of this application provides a communication apparatus. The communication apparatus has a function of implementing any one of the foregoing aspects. The function may be implemented by hardware, or may be implemented by executing corresponding software by hardware. The hardware or the software includes one or more modules or units corresponding to the foregoing function, for example, a transceiver module or unit, a processing module or unit, and an obtaining module or unit.

According to a sixth aspect, an embodiment of this application provides a communication apparatus, including a memory and a processor. The memory is configured to store a computer program, and the processor is configured to cause, when invoking the computer program, an electronic device to perform the method in any one of the foregoing aspects.

According to a seventh aspect, an embodiment of this application provides a chip system, where the chip system includes a processor. The processor is coupled to a memory, and the processor executes a computer program stored in the memory, to implement the method in any one of the foregoing aspects.

The chip system may be a single chip or a chip module including a plurality of chips.

According to an eighth aspect, an embodiment of this application provides a computer-readable storage medium. The computer-readable storage medium stores a computer program, and when the computer program is executed by a processor, the method in any one of the foregoing aspects is implemented.

According to a ninth aspect, an embodiment of this application provides a computer program product. When the computer program product runs on a communication apparatus, the communication apparatus is caused to perform the method in any one of the foregoing aspects.

It may be understood that for beneficial effects of the fifth aspect to the ninth aspect, refer to the related descriptions in the first aspect to the fourth aspect. Details are not described herein again.

### BRIEF DESCRIPTION OF DRAWINGS

FIG. 1 is a diagram of an architecture of a communication system according to an embodiment of this application;
FIG. 2 is a diagram of an architecture of another communication system according to an embodiment of this application;
FIG. 3 is a diagram of a user plane protocol model according to an embodiment of this application;
FIG. 4 is a diagram of a communication method according to an embodiment of this application;
FIG. 5 is a diagram of another communication method according to an embodiment of this application;
FIG. 6A and FIG. 6B are a diagram of still another communication method according to an embodiment of this application;
FIG. 7A and FIG.7B are a diagram of still another communication method according to an embodiment of this application;
FIG. 8A and FIG. 8B are a diagram of another communication method according to an embodiment of this application;
FIG. 9A and FIG. 9B are a diagram of still another communication method according to an embodiment of this application;
FIG. 10 is a diagram of still another communication method according to an embodiment of this application; and
FIG. 11 is a block diagram of a communication apparatus according to an embodiment of this application.

### DESCRIPTION OF EMBODIMENTS

The following describes technical solutions in embodiments of this application with reference to accompanying drawings in embodiments of this application.

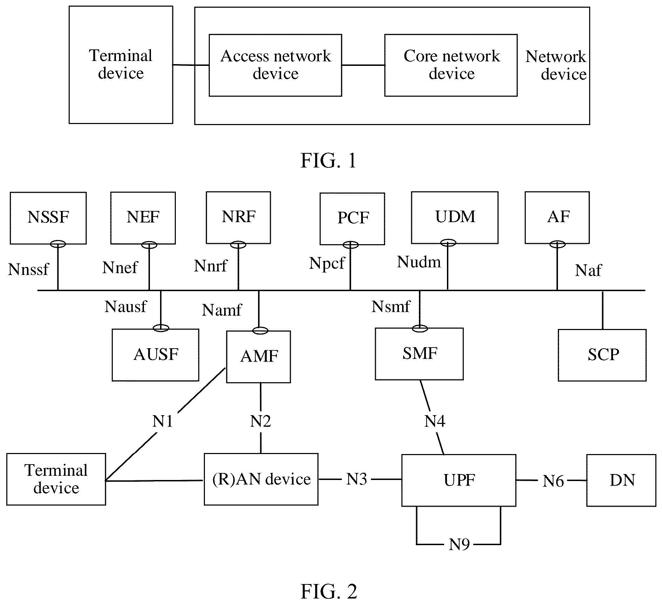

FIG. 1 is a diagram of an architecture of a communication system according to an embodiment of this application. As shown in FIG. 1, the communication system includes a terminal device and a network device. The network device includes an access network (access network, AN) device and a core network device. The access network device may alternatively be replaced with a radio access network (radio access network, RAN) device.

The terminal device accesses a core network via the access network device or the radio access network device. The terminal device includes a device that provides voice and/or data connectivity for users. Specifically, the terminal device includes a device that provides voice for users, includes a device that provides data connectivity for users, or includes a device that provides voice and data connectivity for users. For example, the terminal device may include a handheld device having a wireless connection function or a processing device connected to a wireless modem. The terminal device may communicate with the core network over a radio access network, and exchange a voice or data with the RAN, or interact with the RAN for a voice and data. The terminal device may include user equipment (user equipment, UE), a wireless terminal device, a mobile terminal device, a device-to-device (device-to-device, D2D) communication terminal device, a vehicle-to-everything (vehicle-to-everything, V2X) terminal device, a machine-to-machine/machine-type communication (machine-to-machine/machine-type communication, M2M/MTC) terminal device, an internet of things (internet of things, IoT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal device may include a mobile phone (or referred to as a "cellular" phone), a computer having a mobile terminal device, a portable, pocket-sized, hand-held, or a computer built-in, mobile apparatus, or the like. For example, the terminal device may be a device like a personal communication service (personal communication service, PCS) phone, a cordless telephone, a session initiation protocol (session initiation protocol, SIP) phone, a wireless local loop (wireless local loop, WLL) station, or a personal digital assistant (personal digital assistant, PDA). The terminal device may further include a limited device, for example, a device with low power consumption, a device with a limited storage capability, or a device with a limited computing capability. For example, the terminal device includes an information sensing device like a barcode, radio frequency identification (radio frequency identification, RFID), a sensor, a global positioning system (global positioning system, GPS), or a laser scanner.

If the various terminal devices described above are located in a vehicle (for example, placed in the vehicle or installed in the vehicle), the terminal devices may be all considered as vehicle-mounted terminal devices. For example, the vehicle-mounted terminal devices are also referred to as on-board units (on-board units, OBUs).

In embodiments of this application, the terminal device may further include a relay (relay). Alternatively, it is understood that any device that can perform data communication with a base station may be considered as the terminal device.

In embodiments of this application, an apparatus configured to implement a function of the terminal device may be a terminal device, or may be an apparatus that can support the terminal device in implementing the function, for example, a chip system. The apparatus may be installed in the terminal device. In embodiments of this application, the chip system may include a chip, or may include a chip and another discrete component. In the technical solutions provided in embodiments of this application, an example in which the apparatus configured to implement the function of the terminal is the terminal device is used for description.

The access network device may be a device via which the terminal device accesses a wireless network. The access network device in embodiments of this application may include various forms of base stations (base stations), for example, may be a macro base station, a micro base station (also referred to as a small cell), a relay station, an access point, a transmitting point (transmitting point, TP), an evolved base station (evolved NodeB, eNodeB), a transmission reception point (transmission reception point, TRP), a next-generation base station (next-generation NodeB, gNB) in a 5G mobile communication system, a device that implements a base station function in an evolved communication system after 5G, a mobile switching center, a device that bears the base station function in device-to-device (device-to-device, D2D), vehicle-to-everything (vehicle-to-everything, V2X), or machine-to-machine (machine-to-machine, M2M) communication, or the like; may be an access network device in a non-terrestrial network (non-terrestrial network, NTN) communication system, that is, may be deployed on a high-altitude platform or a satellite; or may be a module or a unit that completes a part of the base station function, for example, may be a central unit (central unit, CU) in a cloud access network (cloud radio access network, C-RAN) system, or may be a distributed unit (distributed unit, DU). A specific technology and a specific device form used by the access network device are not limited in embodiments of this application. All or a part of functions of the radio access network device may alternatively be implemented through a software function running on hardware, or implemented through a virtualized function instantiated on a platform (for example, a cloud platform). In embodiments of this application, unless otherwise specified, the access network device is the radio access network device.

Different core network devices of the core network are described as follows.

A user plane network element is used for packet routing and forwarding, quality of service (quality of service, QoS) handling of user plane data, and the like. As shown in FIG. 2, in a 5G communication system, the user plane network element may be a user plane function (user plane function, UPF) network element. In a future communication system, the user plane network element may still be the UPF network element, or may have another name. This is not limited in embodiments of this application.

A data network (data network, DN) network element is configured to provide a network for data transmission. As shown in FIG. 2, in a 5G communication system, the data network may be a DN. In a future communication system, the data network may still be the DN, or may have another name. This is not limited in embodiments of this application.

An authentication service network element is configured to: perform service authentication, generate a key to implement two-way authentication for a terminal device, and support a unified authentication framework. As shown in FIG. 2, in a 5G communication system, the authentication service network element may be an authentication server function (authentication server function, AUSF) network element. In a future communication system, the authentication server function network element may still be the AUSF network element, or may have another name. This is not limited in embodiments of this application.

An access and mobility management network element is configured to perform mobility management, access management, and the like, and may be configured to implement functions, for example, lawful intercept and access authorization/authentication, other than session management in functions of a mobility management network element (mobility management entity, MME). As shown in FIG. 2, in a 5G communication system, the access and mobility management network element may be an access and mobility management function (access and mobility management function, AMF) network element. In a future communication system, the access and mobility management network element may still be the AMF network element, or may have another name. This is not limited in embodiments of this application.

A session management network element is mainly configured for session management, internet protocol (internet protocol, IP) address allocation and management of a terminal device, selection and management of a user plane function, termination of interfaces toward policy control and charging functions, downlink data notification, and the like. As shown in FIG. 2, in a 5G communication system, the session management network element may be a session management function (session management function, SMF) network element. In a future communication system, the session management network element may still be the SMF network element, or may have another name. This is not limited in embodiments of this application.

A service communication function network element is configured to provide a selection communication function between network function (network function, NF) network elements. As shown in FIG. 2, in a 5G communication system, the service communication function network element may be a service communication function (service communication function, SCP) network element. In a future communication system, the service communication function network element may still be the SCP network element, or may have another name. This is not limited in embodiments of this application.

A network slice selection function network element is configured to provide a network slice selection function. As shown in FIG. 2, in a 5G communication system, the network slice selection function network element may be a network slice selection function (network slice selection function, NSSF) network element. In a future communication system, the network slice selection function network element may still be the NSSF network element, or may have another name. This is not limited in embodiments of this application.

A network capability exposure function network element is configured to provide a network customization function. As shown in FIG. 2, in a 5G communication system, the network capability exposure function network element may be a network capability exposure function (network exposure function, NEF) network element. In a future communication system, the network capability exposure function network element may still be the NEF network element, or may have another name. This is not limited in embodiments of this application.

A network repository network element is configured to maintain real-time information of all network function services in a network. As shown in FIG. 2, in a 5G communication system, the network repository network element may be a network repository function (network repository function, NRF) network element. In a future communication system, the network repository network element may still be the NRF network element, or may have another name. This is not limited in embodiments of this application.

A policy control network element is configured to support a unified policy framework to govern network behavior, and provide policy rule information and the like for a control plane network element (for example, an AMF network element or an SMF network element). For example, the provided policy rule information may be a UE route selection policy (UE route selection policy, URSP), the route selection policy may include a route selection descriptor (route selection descriptor, RSD), and the RSD may include a route selection parameter.

In a 4G communication system, the policy control network element may be a policy and charging rules function (policy and charging rules function, PCRF) network element. As shown in FIG. 2, in a 5G communication system, the policy control network element may be a policy control function (policy control function, PCF) network element. In a future communication system, the policy control network element may still be the PCF network element, or may have another name. This is not limited in embodiments of this application.

A data management network element is configured for terminal device identification handling, access authentication, registration, mobility management, and the like. As shown in FIG. 2, in a 5G communication system, the data management network element may be a unified data management (unified data management, UDM) network element. In a future communication system, the data management network element may still be the UDM network element, or may have another name. This is not limited in embodiments of this application.

An application network element is configured to: perform application-influenced data routing, access a network exposure function network element, interact with a policy framework for policy control, and the like. As shown in FIG. 2, in a 5G communication system, the application network element may be an application function (application function, AF) network element. In a future communication system, the application network element may still be the AF network element, or may have another name, for example, an application server, a service server, or a third-party server. This is not limited in embodiments of this application. In embodiments of this application, the application server is used as an example for description.

Refer to FIG. 2. A terminal device accesses a 5G network via a (R)AN device, and the terminal device communicates with an AMF network element through an N1 interface (referred to as N1 for short). The (R)AN device communicates with the AMF network element through an N2 interface (referred to as N2 for short). The (R)AN device communicates with a UPF network element through an N3 interface (referred to as N3 for short). An SMF network element communicates with the UPF network element through an N4 interface (referred to as N4 for short). The UPF network element accesses a DN through an N6 interface (referred to as N6 for short). Different UPF network elements communicate with each other through an N9 interface (referred to as N9 for short). In an architecture shown in FIG. 2, N1, N2, N3, N4, N6, and N9 respectively represent reference points (reference points) between related network elements/network functions. The (R)AN device is an AN device or a RAN device.

In addition, a control plane function like an AUSF network element, the AMF network element, the SMF network element, an NSSF network element, a NEF network element, an NRF network element, a PCF network element, a UDM network element, or an AF network element shown in FIG. 2 uses a service-based interface for interaction. For example, a service-based interface exhibited by the AUSF network element is Nausf; a service-based interface exhibited by the AMF network element is Namf; a service-based interface exhibited by the SMF network element is Nsmf; a service-based interface exhibited by the NSSF network element is Nnssf; a service-based interface exhibited by the NEF network element is Nnef; a service-based interface exhibited by the NRF network element is Nnrf; a service-based interface exhibited by the PCF network element is Npcf; a service-based interface exhibited by the UDM network element is Nudm; and a service-based interface exhibited by the AF network element is Naf. For related function descriptions and interface descriptions, refer to a diagram of a 5G system architecture (5G system architecture) in the TS 23.501 standard. Details are not described herein.

Optionally, the foregoing core network devices may be implemented by one device, may be jointly implemented by a plurality of devices, or may be implemented by one functional module in one device. This is not specifically limited in embodiments of this application. It may be understood that the foregoing functional module may be a network element in a hardware device, may be a software functional module running on dedicated hardware, or may be a virtualized functional module instantiated on a platform (for example, a cloud platform).

Optionally, in embodiments of this application, the term "network element", and an "entity", a "device", or the like may be replaced with each other. For example, the "AMF network element" may alternatively be written as an "AMF entity" or an "AMF device", and the "SMF network element" may alternatively be written as an "SMF entity" or an "SMF device". In addition, in some embodiments, for ease of description, an "XXX network element" is written as "XXX" for short. For example, the "AUSF network element" may alternatively be written as "AUSF" for short, and the "SMF network element" may alternatively be written as "SMF" for short. In embodiments of this application, the XXX network element is used as an example for description. Unified descriptions are provided herein, and details are not described below again.

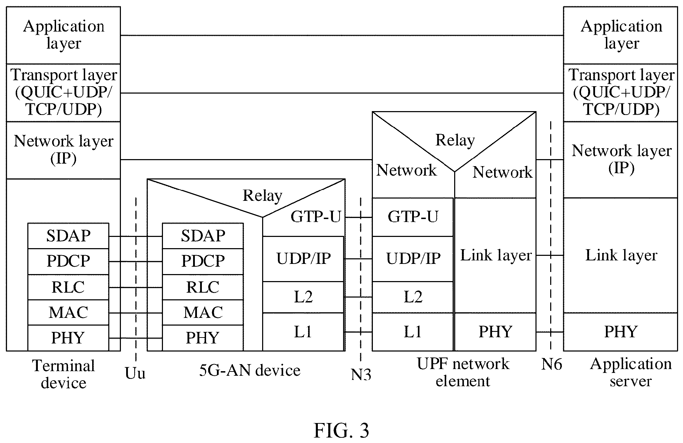

FIG. 3 shows a user plane protocol model from a terminal device to an application server. For example, the application server may be the AF in FIG. 2.

The protocol model includes an application layer (Application layer), a transport layer (transport layer), a network layer (Network layer), a link layer (Link layer), and a physical layer (Physical layer) from top to bottom.

In FIG. 3, a connection used to send or receive data is located at the transport layer, and the transport layer is an end-to-end protocol layer from the terminal device to the application server. Related protocols of the transport layer include a quick user datagram protocol internet connection (quick user datagram protocol internet connection, QUIC) protocol and/or a user datagram protocol (user datagram protocol, UDP), a transmission control protocol (transmission control protocol, TCP), or the like.

It is easy to understand that in some protocol division models, the QUIC protocol is divided into an application layer protocol rather than a transport layer protocol. In embodiments of this application, an example in which the transport layer includes the QUIC protocol is used for description. This should not be understood as a limitation on this application.

Below the network layer, there are several segments of different 3GPP network protocol stacks from the terminal device to an access network device and from the access network device to a user plane network element that are interconnected. Specifically, a 3GPP internet protocol stack between the terminal device and the access device includes a service data adaptation protocol (service data adaptation protocol, SDAP) layer, a packet data convergence protocol (packet data convergence protocol, PDCP) layer, and lower protocol layers. The lower protocol layers include a radio link control (radio link control, RLC) layer, a media access control (media access control, MAC) layer, and a physical (physical, PHY) layer. A 3GPP internet protocol stack between the access network device and the user plane network element (for example, a UPF network element shown in FIG. 3) includes a general packet radio service (general packet radio service, GPRS) tunnelling protocol for the user plane (GPRS tunnelling protocol for the user plane, GTP-U) layer and lower protocol layers. The lower protocol layers include a user datagram protocol (user datagram protocol, UDP) layer/an internet protocol (internet protocol, IP) layer, a layer 2 (level2, L2), and a layer 1 (level1, L1). The access network device and the user plane network element belong to a 3GPP network.

The internet protocol stacks between the terminal device and the user plane network element include the network layer. An internet protocol stack between the user plane network element and the application server includes a network layer, a link layer (Link layer), and a physical layer.

For ease of understanding embodiments of this application, the following first briefly describes related technologies or terms in embodiments of this application. It should be understood that these descriptions are merely intended to facilitate understanding of embodiments of this application, and shall not constitute any limitation on this application.

### 1. QUIC protocol

The QUIC protocol is a network transmission protocol based on a user datagram protocol (user datagram protocol, UDP). The QUIC protocol is implemented based on a transport layer protocol UDP. This ensures compatibility with an existing network, reduces a handshake delay, and further reduces a delay of accessing the network by a user. The QUIC protocol has a connection migration characteristic. QUIC introduces a QUIC connection identifier (QUIC connection id, CID). The introduction of the CID causes transmission between a client and a server-side to be not affected as the network changes. Even if the network needs to be switched, service continuity can be ensured.

The client and the server-side may perform data transmission on one physical path according to the QUIC protocol.

The client may be an application running on a terminal device. For the terminal device, refer to the descriptions in FIG. 1. Details are not described herein again.

The server-side may serve the client, and the server-side may provide a resource for the client, store data of the client, and the like. In addition, the server-side may also be referred to as a server, an application server (application server, AS), or the like. In embodiments of this application, the application server is used as an example for description.

### 2. Session continuity

If a PDU session corresponding to a first data flow has continuity, it indicates that the PDU session is not permitted to be re-established. When a session has continuity, a service also has continuity. In other words, the continuity of the PDU session can ensure that the first data flow is not interrupted, and therefore, has service continuity.

### 3. Service continuity

If a first data flow has service continuity, it indicates that the first data flow is not permitted to be interrupted. When a PDU session has continuity, a service also has continuity. When a PDU session does not have session continuity, a service may also have continuity. In other words, re-establishment of the PDU session may not cause service interruption. For example, in a scenario in which a user watches a video, there is a cached video. Therefore, the PDU session can be re-established, and a video may continue to be downloaded by using the re-established PDU session. In this way, it can be ensured that the video watched by the user is not interrupted. In other words, in this case, the first data flow has the service continuity but does not have the session continuity.

### 4. Session and service continuity (session and service continuity, SSC) mode

The SSC mode includes a mode 1, a mode 2, and a mode 3, where the mode 1 indicates that a first data flow has session continuity, and having the session continuity indicates also having service continuity, in other words, in the mode 1, the first data flow has both the session continuity and the service continuity. The mode 2 indicates that the first data flow has neither the service continuity nor the session continuity. The mode 3 indicates that the first data flow has the service continuity but does not have the session continuity. Therefore, a session in the mode 1 cannot be re-established within a life cycle of the session, and an anchor UPF of the session remains unchanged. For a session in the mode 2, a network device may trigger to release a PDU session and indicate UE to re-establish a PDU session. A DN of the re-established PDU session is the same as a DN of the released PDU session. It is clear that the re-established PDU session may be understood as a replacement for the released PDU session. Sessions in the mode 3 are a new PDU session that is established before a network permits session release, and a PDU session that is first established between the network and user equipment and that is to be released after specific duration. That is, there are two PDU sessions that coexist within the specific duration.

### 5. Transmission via a plurality of PDU sessions

A terminal device and a network device may establish the plurality of PDU sessions to perform transmission of a first data flow.

The terminal device may establish a protocol data unit (protocol data unit, PDU) session with the network device, and perform data transmission by using the established PDU session. In a conventional technology, the terminal device may establish the PDU session by using a route selection parameter. However, the route selection parameter selected by the terminal device may not be a good parameter, and user experience may be affected. For example, the network device may send a UE route selection policy (UE route selection policy, URSP) to the terminal device. The URSP may include a route selection descriptor (route selection descriptor, RSD), and the RSD may include a route selection parameter. The terminal device may establish the PDU session based on the route selection parameter included in the RSD. However, in some cases, the route selection parameter included in the RSD is not a good parameter. After the terminal device selects the route selection parameter in the RSD to establish the PDU session, the established PDU session is not applicable to transmission of data of the terminal device. Consequently, user experience may be affected.

In embodiments of this application, a first network device may send a first route selection parameter to a terminal device. If a protocol corresponding to a first data flow matches a first protocol, a PDU session for transmission of the first data flow may be determined based on the first route selection parameter. The PDU session determined for the first data flow is applicable to the first protocol, so that the determined PDU session can be for better transmission of the first data flow. In this way, user experience can be improved.

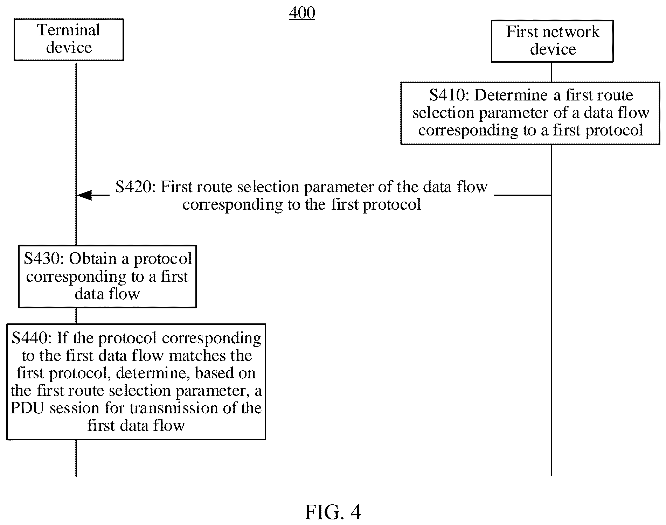

With reference to FIG. 4, the following describes a method 400 for establishing a PDU session in an embodiment of this application. The method includes the following steps.

S410: A first network device determines a first route selection parameter of a data flow corresponding to a first protocol.

Optionally, the first route selection parameter may include a parameter used by a terminal device to send a first data flow.

Optionally, if first protocols are different, first route selection parameters of data flows corresponding to the first protocols may be different or the same.

Optionally, S410 includes: The first network device determines, according to the first protocol, the first route selection parameter of the data flow corresponding to the first protocol.

Optionally, the data flow corresponding to the first protocol may be a data flow of which transmission is performed by using the first protocol, for example, when the first protocol may be a QUCI protocol, a data flow of which transmission is performed by using the QUIC protocol; or for another example, when the first protocol may be a TCP or a UDP, a data flow of which transmission is performed by using the TCP or the UDP.

Optionally, the first network device may be a policy control network element.

Optionally, the first network device may determine a first route selection parameter of a data flow of a first application corresponding to the first protocol. In other words, the first network device may determine a first route selection parameter for an application (the first application). In this way, when sending the data flow of the first application, the terminal device can determine a PDU session based on the first route selection parameter, and further send the data flow of the first application based on the PDU session.

The following describes the first route selection parameter in three cases.

Case 1: The first route selection parameter includes a session and service continuity (session and service continuity, SSC) mode.

Optionally, S410 includes: If the first protocol includes the QUCI protocol, the first network device determines that the SSC mode of the data flow corresponding to the first protocol is a mode 3 or a mode 1. For example, if the first protocol is QUCI+UDP, the first network device determines that the SSC mode of the data flow corresponding to the first protocol is the mode 3 or the mode 1. For another example, if the first protocol is QUIC, the first network device determines that the SSC mode of the data flow corresponding to the first protocol is the mode 3 or the mode 1. A session in the mode 3 has service continuity but does not have session continuity, in other words, the session in the mode 3 may be re-established but the service continuity cannot be affected. A session in the mode 1 cannot be re-established, and therefore, the session in the mode 1 has both the session continuity and the service continuity. In other words, if the first protocol includes the QUCI protocol, due to connection migration of the QUCI protocol, even if the PDU session is switched, the service continuity is not affected. Therefore, the SSC mode can be the mode 3 or the mode 1. The first network device determines that the SSC mode of the data flow corresponding to the first protocol is either the mode 3 or the mode 1, for example, the mode 3.

Optionally, S410 includes: If the data flow corresponding to the first protocol has a session and service continuity requirement and the first protocol includes the QUCI protocol, determine that the SSC mode of the data flow corresponding to the first protocol is the mode 3 or the mode 1. For example, if the data flow corresponding to the first protocol has the session and service continuity requirement and the first protocol is QUCI+UDP, the first network device determines that the SSC mode of the data flow corresponding to the first protocol is the mode 3 or the mode 1. For another example, if the data flow corresponding to the first protocol has the session and service continuity requirement and the first protocol is the QUCI protocol, the first network device determines that the data flow corresponding to the first protocol is the mode 3 or the mode 1. The session in the mode 3 has the service continuity but does not have the session continuity, in other words, the session in the mode 3 may be re-established but the service continuity cannot be affected. The session in the mode 1 cannot be re-established, and therefore, the session in the mode 1 has both the session continuity and the service continuity. In other words, if the data flow corresponding to the first protocol has the session and service continuity requirement and the first protocol includes the QUCI, due to the connection migration of the QUCI, even if the PDU session is switched, the service continuity is not affected. Therefore, the SSC mode can be the mode 3 or the mode 1. The first network device determines that the SSC mode of the data flow corresponding to the first protocol is either the mode 3 or the mode 1, for example, the mode 3.

Optionally, S410 includes: If the first protocol is the datagram protocol (user datagram protocol, UDP) or the transmission control protocol (transmission control protocol, TCP), the SSC mode of the data flow corresponding to the first protocol is the mode 1. The session in the mode 1 has both the session continuity and the service continuity. In other words, if the first protocol is the TCP or the UDP, switching the PDU session may cause service interruption. Therefore, to avoid switching the PDU session, the SSC mode of the data flow corresponding to the first protocol can be determined as the mode 1.

Optionally, S410 includes: If the data flow corresponding to the first protocol has the session and service continuity requirement and the first protocol is the UDP or the transmission control protocol TCP, the SSC mode of the data flow corresponding to the first protocol is the mode 1. The session in the mode 1 has both the session continuity and the service continuity. In other words, if the data flow corresponding to the first protocol has the session and service continuity requirement and the first protocol is the TCP or the UDP, switching the PDU session may cause the service interruption. Therefore, to avoid switching the PDU session, the SSC mode of the data flow corresponding to the first protocol can be determined as the mode 1.

Optionally, in Case 1, S410 includes: If the data flow corresponding to the first protocol has the session and service continuity requirement, the first network device determines the first route selection parameter of the data flow corresponding to the first protocol. The first route selection parameter includes the session and service continuity (session and service continuity, SSC) mode. In other words, for a data flow that has the session and service continuity requirement, the first route selection parameter of the data flow corresponding to the first protocol may be determined.

Optionally, in Case 1, S410 includes: If the data flow corresponding to the first protocol has a service continuity requirement but does not have a session continuity requirement, the first network device determines the first route selection parameter of the data flow corresponding to the first protocol.

Optionally, if the data flow corresponding to the first protocol does not have the service continuity requirement, the first network device may not perform determining on the SSC mode of the data flow corresponding to the first protocol, but may directly determine the SSC mode of the data flow as a mode 2. Optionally, if the data flow corresponding to the first protocol has neither the session continuity requirement nor the service continuity requirement, the first network device may not determine the SSC mode of the data flow corresponding to the first protocol.

Optionally, the first network device may be the PCF, and the PCF may determine, based on subscription data that is of the terminal device and that is in a UDM, whether the data flow corresponding to the first protocol has the session and service continuity requirement.

Case 2: The first route selection parameter includes a first parameter, and the first parameter indicates that transmission of a data flow is performed via a plurality of PDU sessions.

Optionally, the first parameter further indicates a first manner of transmission of the data flow via the plurality of PDU sessions, and the first manner is a switching manner or an aggregation manner. When the first parameter indicates that transmission of the data flow is performed via the plurality of PDU sessions and the first manner of transmission of the data flow via the plurality of PDU sessions, there may be different parameters indicating that transmission of the data flow is performed via the plurality of PDU sessions and the first manner of transmission of the data flow via the plurality of PDU sessions, or there may be a same parameter indicating that transmission of the data flow is performed via the plurality of PDU sessions and the first manner of transmission of the data flow via the plurality of PDU sessions. This is not limited in embodiments of this application.

Optionally, that the first manner is the switching manner indicates that the terminal device may switch between the plurality of PDU sessions to use one PDU session to perform transmission of the data flow. For example, the terminal device may switch a first PDU session to a second PDU session to perform transmission of the first data flow.

Optionally, that the first manner is the aggregation manner indicates that the terminal device may simultaneously perform transmission of the data flow via the plurality of PDU sessions. For example, the terminal device may simultaneously perform transmission of the first data flow by using the first PDU session and the second PDU session, and data of the first data flow may be routed to the first PDU session and the second PDU session.

Optionally, S410 includes: If the first protocol includes the QUCI, the first network device determines that the first parameter indicates that the first manner of transmission of the data flow via the plurality of PDU sessions is the switching manner. If the first protocol is the UDP or the TCP, the first network device determines that the first parameter indicates that the first manner of transmission of the data flow via the plurality of PDU sessions is the aggregation manner. In other words, if the first protocol includes the QUCI, because a CID is introduced in the QUIC, transmission of the data flow is not affected as a network changes, and even if switching between a plurality of PDU sessions is performed, service continuity can be ensured. Therefore, the first network device can determine that the first manner of transmission of the data flow via the plurality of PDU sessions is the switching manner. If the first protocol is the UDP or the TCP, switching a session causes service interruption. Therefore, to avoid the service interruption, the first manner of transmission of the data flow via the plurality of PDU sessions is the aggregation manner.

Optionally, if a service requirement of the data flow corresponding to the first protocol is higher than a preset requirement, the first network device needs to determine, according to the first protocol, whether the first manner of transmission of the data flow via the plurality of PDU sessions is the switching manner or the aggregation manner, as indicated by the first parameter. If the data flow corresponding to the first protocol does not have the service requirement or has a low service requirement, it may be randomly determined whether the manner of transmission of the data flow via the plurality of PDU sessions is the switching manner or the aggregation manner. In other words, for a data flow having a high service requirement, suitable one of the two manners may be selected according to the first protocol. For a data flow not having the service requirement or a data flow having a low service requirement, either of the two manners may be randomly selected.

Optionally, the service requirement of the data flow corresponding to the first protocol may be at least one of a bandwidth requirement, a delay requirement, a throughput requirement, a rate requirement, a quality of service (quality of service, QoS) requirement, a service type requirement, or the like. For example, a service type may be extended reality (extended reality, XR) or meta.

Optionally, if the service requirement of the data flow corresponding to the first protocol is higher than the preset requirement, the first network device may directly determine that the manner of transmission of the data flow via the plurality of PDU sessions is the aggregation manner. In other words, for the data flow having the high service requirement, to improve user experience, the plurality of PDU sessions may be aggregated for use.

Case 3: The first route selection parameter includes an SSC mode and a first parameter, and the first parameter indicates that transmission of a data flow is performed via a plurality of PDU sessions. Optionally, the first parameter further indicates a first manner of transmission of the data flow via the plurality of PDU sessions, and the first manner is a switching manner or an aggregation manner.

Optionally, S410 includes: If the first protocol includes the QUIC protocol, the first network device determines that the SSC mode in the first route selection parameter of the data flow corresponding to the first protocol is a mode 3 or a mode 1, where the first parameter indicates that the first manner of transmission of the data flow via the plurality of PDU sessions is the switching manner. If the first protocol is the UDP or the TCP, the first network device determines that the SSC mode in the first route selection parameter of the data flow corresponding to the first protocol is the mode 1, where the first parameter indicates that the first manner of transmission of the data flow via the plurality of PDU sessions is the aggregation manner.

Optionally, S410 includes: If the data flow corresponding to the first protocol has a session and service continuity requirement and a service requirement of the data flow corresponding to the first protocol is higher than a preset requirement, the first network device determines, according to the first protocol, the first route selection parameter of the data flow corresponding to the first protocol.

Optionally, if the data flow corresponding to the first protocol has the session and service continuity requirement, the first network device determines that the SSC mode of the data flow corresponding to the first protocol is the mode 1. If the service requirement of the data flow corresponding to the first protocol is higher than the preset requirement and the first protocol includes the QUIC protocol, the first network device determines that the first manner of transmission of the data flow via the plurality of PDU sessions is the switching manner. If the service requirement of the data flow corresponding to the first protocol is higher than the preset requirement and the first protocol is the TCP or the UPD, the first network device determines that the first manner of transmission of the data flow via the plurality of PDU sessions is the aggregation manner. In other words, for a data flow having the session and service continuity requirement, the SSC mode may be directly determined as the mode 1. However, if the service requirement of the data flow corresponding to the first protocol is higher than the preset requirement, the first manner of transmission of the data flow via the plurality of PDU sessions may be determined according to the first protocol.

Optionally, if the data flow corresponding to the first protocol does not have the service requirement or the service requirement is lower than the preset requirement, the first network device may determine that the first manner of transmission of the data flow via the plurality of PDU sessions is the aggregation manner or the switching manner. If the data flow corresponding to the first protocol has the session and service continuity requirement and the first protocol includes QUIC, the first network device determines that the SSC mode in the first route selection parameter of the data flow corresponding to the first protocol is the mode 3 or the mode 1. If the data flow corresponding to the first protocol has the session and service continuity requirement and the first protocol is the UDP or the TCP, the first network device determines that the SSC mode in the first route selection parameter of the data flow corresponding to the first protocol is the mode 1. In other words, for a data flow having a low service requirement or not having the service requirement, the first network device may randomly select either the aggregation manner or the switching manner as the first manner. However, if the data flow corresponding to the first protocol has the session and service continuity requirement, the SSC mode of the data flow corresponding to the first protocol may be determined according to the first protocol.

Optionally, SSC modes of all of the plurality of PDU sessions for transmission of the data flow corresponding to the first protocol may be the same, for example, may all be the mode 3, or may all be the mode 1.

Optionally, in S410, the first network device may determine, according to different protocols, route selection parameters of data flows corresponding to different protocols. For example, the first network device determines that a route selection parameter of a data flow corresponding to a protocol 1 is a route selection parameter 1, and a route selection parameter of a data flow corresponding to a protocol 2 is a corresponding route selection parameter 2.

Optionally, the first network device may be the PCF shown in FIG. 2.

S420: The first network device sends the first route selection parameter of the data flow corresponding to the first protocol, and the terminal device receives, from the first network device, the first route selection parameter of the data flow corresponding to the first protocol.

Optionally, the first network device may further send first indication information, and the terminal device receives the first indication information indicative of the first protocol. Optionally, the first indication information may directly or indirectly indicate the first protocol. This is not limited in this embodiment of this application. Optionally, in some cases, the first network device may not send the first indication information, and it is default that the terminal device may learn of the first protocol in advance. Whether the first network device sends the first indication information is not limited in this embodiment of this application.

Optionally, the first network device may simultaneously send the first route selection parameter and the first indication information. For example, the first network device may send the first route selection parameter and the first indication information in a first message. The first network device may alternatively separately send the first route selection parameter and the first indication information. A sequence of sending the first indication information and second indication information by the first network device is not limited in this embodiment of this application.

Optionally, if the first network device may determine the first route selection parameter of the data flow of the first application corresponding to the first protocol, the first route selection parameter and the first protocol may correspond to the first application.

Optionally, S420 includes: The first network device sends a first route selection policy including the first route selection parameter. Optionally, a first route selection descriptor (route selection descriptor, RSD) in the first route selection policy may include the first route selection parameter. Optionally, that the first network device sends the first indication information includes: The first network device sends the first route selection policy, where the first route selection policy may include the first indication information. In other words, the first route selection policy may include the first route selection parameter and/or the first indication information.

Optionally, the first route selection policy may include at least one RSD, and precedence of all of the at least one RSD may be different. Different RSDs may include different route selection parameters. For example, the first RSD includes the first route selection parameter, and a second RSD includes a second route selection parameter. For example, precedence of each RSD may be RSD precedence in Table 2.

Optionally, the first route selection policy may be a user equipment route selection policy (UE route selection policy, URSP). For example, Table 1 may be the first route selection policy, and the first indication information may be a transport protocol identifier in Table 1, where the transport protocol identifier indicates the first protocol. In Case 1 in S410, the SSC mode in the first route selection parameter may be SSC mode selection in Table 2, and a value of an SSC mode of the SSC mode selection in Table 2 may indicate the mode 1 or the mode 3. In Case 2 in S410, the first parameter in the first route selection parameter may be a PDU session pair identifier for switching or a PDU session pair identifier for aggregation in Table 2. In Case 3 in S410, the first route selection parameter may include the SSC mode and the first parameter. The SSC mode is SSC mode selection in Table 2, and the first parameter may be a PDU session pair identifier for switching in Table 2, or a PDU session pair identifier for aggregation in Table 2. The PDU session pair identifier for switching indicates that a PDU session pair is for transmission of the first data flow in the switching manner, and the PDU session pair identifier for aggregation indicates that two PDU sessions are for transmission of the first data flow in the aggregation manner. In other words, in Case 2 and Case 3, the first parameter indicates usage manners of the pair of PDU sessions. The 1^{st} column in Table 1 illustrates parameters included in the URSP, the 1^{st} column in Table 2 illustrates parameters included in the RSD, the 2^{nd} column each in Table 1 and Table 2 provides description of the parameters included in the 1^{st} column, the 3^{rd} column in Table 1 and Table 2 indicates whether the parameters in the 1^{st} column are optional or mandatory, and the 4^{th} column in Table 1 and Table 2 shows whether the PCF is permitted to modify the parameters in the 1^{st} column in a UE context. In this case, the network device in the method 400 may be the PCF. The 5^{th} column in Table 1 and Table 2 indicates that a modification range is the UE context if the parameters in the 1^{st} column are permitted to be modified in the UE context in the 4^{th} column. For other parameters in Table 1 and Table 2, refer to descriptions in the 3GPP 23.503 protocol.

**Table 1**

| **Information name** | **Description** | **Category** | **PCF permitted to modify in a UE context** | **Range** |
|---|---|---|---|---|
| Rule precedence (rule precedence) | Determines the order a URSP rule is enforced in UE (Determines the order the URSP rule is enforced in the UE) | Mandatory (mandatory) | Yes | UE context (UE context) |
| Traffic descriptor (traffic descriptor) | This part defines traffic descriptor components for the URSP rule (this part defines the traffic descriptor components for the URSP rule) | Mandatory (mandatory) | | |
| Application descriptors (application descriptors) | Includes an application identifier | Optional (optional) | Yes | UE context (UE context) |
| Internet protocol descriptors (IP descriptors) | Destination IP 3 tuple(s) (Destination IP 3 tuple(s)) (IP address or IPv6 network prefix, port number, and protocol identifier of an IP protocol (IP address or IPv6 network prefix, port number, protocol ID of the protocol above IP)) | Optional (optional) | Yes | UE context (UE context) |
| Domain descriptors (domain descriptors) | Fully qualified domain name or regular expression which is used as a domain name matching criterion ((fully qualified domain name, FQDN(s)) or a regular expression which are used as a domain name matching criteria) (NOTE 6) | Optional (optional) | Yes | UE context (UE context) |
| Non-internet protocol descriptors (non-IP descriptors) | Descriptor for destination information of non-IP traffic (descriptor(s) for destination information of non-IP traffic) | Optional (optional) | Yes | UE context (UE context) |
| Data network name (data network name, DNN) | This is matched against DNN information provided by an application (this is matched against the DNN information provided by the application) | Optional (optional) | Yes | UE context (UE context) |
| Connection capabilities (connection capabilities) | This is matched against information provided by a UE application when it requests a network connection with certain capabilities (this is matched against the information provided by a UE application when it requests a network connection with certain capabilities) | Optional (optional) | Yes | UE context (UE context) |
| **Transport protocol identifier (transport protocol ID)** | This is matched against transport layer protocol information provided by the application (this is matched against the Transport layer protocol information provided by the application), where for example, a transport layer protocol may be TCP, UDP, QUIC+UDP, or QUIC | Optional (optional) | Yes | UE context (UE context) |
| List of route selection descriptors (list of route selection descriptors) | Components included in the list of the route selection descriptors are described in Table 2 (the components of a route selection descriptor are described in table 2) | Mandatory (mandatory) | | |

**Table 2**

| **Information name** | **Description** | **Category** | **PCF permitted to modify in URSP** | **Range** |
|---|---|---|---|---|
| RSD precedence (Route Selection Descriptor Precedence) | Determines an order in which RSDs are to be applied (Determines the order in which the route selection descriptors are to be applied) | Mandatory (mandatory) | Yes | UE context (UE context) |
| Route selection components (Route selection components) | This part defines the route selection components (This part defines the route selection components) | Mandatory (mandatory) | Yes | |
| SSC mode selection (SSC Mode Selection) | One single value of an SSC mode (One single value of SSC mode) | Optional (optional) | Yes | UE context (UE context) |
| Network slice selection (network slice selection) | Either a single value or a list of values of single network slice selection assistance information (Either a single value or a list of values of S-NSSAI(s)) | Optional (optional) | Yes | UE context (UE context) |
| DNN selection (DNN Selection) | Either a single value or a list of values of a DNN (Either a single value or a list of values of DNN(s)) | Optional (optional) | Yes | UE context (UE context) |
| PDU session type selection (PDU session type selection) | One single value of a PDU session type (One single value of PDU session type) | Optional (optional) | Yes | UE context (UE context) |
| Non-seamless offload indication (non-seamless offload indication) | Indicates if traffic of a matching application is to be offloaded to 3GPP access outside of a PDU session (Indicates if the traffic of the matching application is to be offloaded to non-3GPP access outside of a PDU session) | Optional (optional) | Yes | UE context (UE context) |
| ProSe Layer-3 UE-to-Network Relay Offload indication | Indicates if the traffic of the matching application is to be sent via a ProSe layer-3 UE-to-network relay outside of a PDU session (Indicates if the traffic of the matching application is to be sent via a ProSe Layer-3 UE-to-Network Relay outside of a PDU session) | Optional (optional) | Yes | UE context (UE context) |
| Access type preference (access type preference) | Preferred access type when UE establishes a PDU session for the matching application (Indicates the preferred Access Type () when the UE establishes a PDU Session for the matching application) (3GPP or non-3GPP or multi-access (3GPP or non-3GPP or Multi-Access)) | Optional (optional) | Yes | UE context (UE context) |
| PDU session pair identifier (PDU Session Pair ID) | Indication shared by a redundant PDU session (An indication shared by redundant PDU) | Optional (optional) | Yes | UE context (UE context) |
| RSN | The RSN as described in clause 5.33.2.1 of TS 23.501 [2] | Optional (optional) | Yes | UE context (UE context) |
| **PDU session pair identifier for switching** (PDU session pair ID for switching) | Indication shared by PDU sessions for traffic switching (An indication shared by PDU sessions for traffic switching) | Optional (optional) | Yes | UE context (UE context) |
| **PDU session pair identifier for aggregation** (PDU session pair ID for aggregation) | Indication shared by PDU sessions for traffic aggregation (An indication shared by PDU sessions for traffic aggregation) | Optional (optional) | Yes | UE context (UE context) |

It should be noted that for Case 1 in S410, Table 2 may not include the PDU session pair identifier for switching and the PDU session pair identifier for aggregation; for Case 2 in S410, Table 2 may not include the SSC mode selection, and may include the PDU session pair identifier for switching or the PDU session pair identifier for aggregation, in other words, Table 2 may include either of the PDU session pair identifier for switching or the PDU session pair identifier for aggregation, but does not include both the PDU session pair identifier for switching and the PDU session pair identifier for aggregation; and for Case 3 in S410, Table 2 may include the SSC mode selection and the PDU session pair identifier for switching, or include the SSC mode selection and the PDU session pair identifier for aggregation.

It should also be noted that Table 1 and Table 2 are merely examples for description, and Table 1 and Table 2 may include more or fewer parameters. This is not limited in this embodiment of this application. For example, when Table 2 includes the PDU session pair identifier for aggregation or the PDU session pair identifier for switching, Table 2 may not include the PDU session pair identifier.

Optionally, the first route selection policy may be a policy corresponding to the data flow corresponding to the first protocol. Optionally, the first network device may send at least one route selection policy to the terminal device, different route selection policies correspond to different protocols, and the at least one route selection policy includes the first route selection policy. Optionally, the first route selection policy may be a policy of the data flow of the first application corresponding to the first protocol. Optionally, the first network device may send at least one route selection policy to the terminal device, and different route selection policies correspond to different protocols of the first application. Optionally, different route selection policies have different rule precedence. Optionally, different route selection policies may correspond to different route selection parameters. In other words, a different route selection policy may correspond to a different parameter in Table 1, for example, different rule precedence, different transport protocol identifiers, different SSC modes, different PDU session pair identifiers for switching, and/or different PDU session pair identifiers for aggregation.

Optionally, when the first network device is the PCF shown in FIG. 2, S420 includes: The PCF sends the first route selection parameter via an AMF. Optionally, that the PCF sends the first route selection parameter via the AMF includes: The PCF sends a UE policy container to the AMF, and the AMF sends the UE policy container through downlink non-access stratum (non-access stratum, NAS) transmission, where the UE policy container includes the first route selection parameter.

Optionally, when the first network device is the PCF shown in FIG. 2, that the first network device sends the first indication information includes: The PCF sends the first indication information via the AMF. Optionally, that the PCF sends the first indication information via the AMF includes: The PCF sends the UE policy container to the AMF, and the AMF sends the UE policy container through downlink non-access stratum (non-access stratum, NAS) transmission, where the UE policy container includes the first indication information.

S430: The terminal device obtains a protocol corresponding to the first data flow.

Optionally, the protocol corresponding to the first data flow may mean transmission of the first data flow by using the protocol.

Optionally, the first data flow is a data flow corresponding to the first application, or a data flow related to the first application. When the first data flow is the data flow corresponding to the first application or the data flow related to the first application, the terminal device may determine, after the first application is started, that a protocol used by the first application is determined as the protocol corresponding to the first data flow. Optionally, the first application may be an application deployed on the terminal device, and the first application may be deployed on different terminal devices. This is not limited in this embodiment of this application. Optionally, the first route selection policy may include a descriptor for describing the first application. For example, the application descriptors shown in Table 1 may be for describing the first application.

S440: If the protocol corresponding to the first data flow matches the first protocol, the terminal device determines, based on the first route selection parameter, a PDU session for transmission of the first data flow.

The first protocol belongs to a transport layer protocol or an application layer protocol. For example, the first protocol is the QUCI protocol, and the QUCI protocol belongs to the transport layer protocol or the application layer protocol. For another example, the first protocol is the UDP or the TCP, and the UDP or the TCP may be the transport layer protocol.

Optionally, that the protocol corresponding to the first data flow matches the first protocol may be that the protocol corresponding to the first data flow is the same as the first protocol, the protocol corresponding to the first data flow is compatible with the first protocol, or the like.

Optionally, that the terminal device determines, based on the first route selection parameter, the PDU session for transmission of the first data flow may include: The terminal device establishes, based on the first route selection parameter, the PDU session for transmission of the first data flow, or selects, based on the first route selection parameter, a PDU session that has been already established and that is for transmission of the first data flow (for example, the first route selection parameter is the same as a route selection parameter of the PDU session that has been already established and that is for transmission of the first data), in other words, the PDU session for transmission of the first data flow may be a newly established PDU session or a PDU session that has been already established. This is not limited in this embodiment of this application.

Optionally, it is assumed that the first route selection policy includes the first route selection parameter and/or the first indication information and the first data flow is the data flow of the first application. Before S440, the terminal device may determine whether the first application is an application identified by an application identifier included in an application descriptor in a route selection policy, and determine whether the first protocol indicated by the first indication information is a protocol identified by a transport protocol identifier in the route selection policy. If determining that an application identified by an application identifier included in an application descriptor in a route selection policy is the first application, and a protocol identified by a transport protocol identifier in the route selection policy is the protocol corresponding to the first data flow of the first application, the terminal device determines the route selection policy as the first route selection policy. Optionally, if applications identified by application identifiers included in application descriptors in a plurality of route selection policies determined by the terminal device each are the first application, and protocols identified by transport protocol identifiers in the plurality of route selection policies each are the first protocol, the terminal device may determine a route selection policy with highest rule precedence in the plurality of route selection policies as the first route selection policy. In other words, the terminal device may match whether the first application is an application identified by an application identifier included in an application descriptor in a route selection policy, and further needs to match whether the protocol corresponding to the first data flow of the first application is a protocol identified by a transport protocol identifier in a route selection policy. If one route selection policy is matched, the route selection policy may be the first route selection policy. If a plurality of route selection policies are matched, a route selection policy may be determined in the plurality of route selection policies based on rule precedence.

Optionally, when the first route selection policy includes the at least one RSD, the terminal device may determine the first RSD in the at least one RSD, and determine a route selection parameter in the first RSD as the first route selection parameter. For example, the terminal device determines, in the at least one RSD, an RSD with highest RSD precedence as the first RSD, and determines the route selection parameter in the first RSD as the first route selection parameter.

Optionally, for Case 1 in S410, the first route selection parameter includes the SSC mode, and the SSC mode may be the mode 1. That the terminal device determines, based on the first route selection parameter, the PDU session for transmission of the first data flow may include: The terminal device establishes the PDU session based on the SSC mode. For example, the terminal device may send a PDU session establishment request message, where the PDU session establishment request message may include: The SSC mode is the mode 1. Alternatively, if the SSC mode in the first route selection parameter is the mode 1, and the terminal device determines that a mode of the PDU session that has been already established is the mode 1, the PDU session that has been already established may be for transmission of the first data flow. The SSC mode may be the mode 3. That the terminal device determines, based on the first route selection parameter, the PDU session for transmission of the first data flow may include: The terminal device establishes the PDU session based on the SSC mode. For example, the terminal device may send a PDU session establishment request message, where the PDU session establishment request message may include: The SSC mode is the mode 3. Alternatively, if the SSC mode in the first route selection parameter is the mode 3, and the terminal device determines that a mode of the PDU session that has been already established is the mode 3, the PDU session that has been already established may be for transmission of the first data flow.

Optionally, for Case 2 in S410, the first route selection parameter includes the first parameter, and the first parameter indicates that transmission of the data flow is performed via the plurality of PDU sessions.

Optionally, in Case 2 in S410, if the first parameter indicates the first manner of transmission of the data flow via the plurality of PDU sessions, the first manner is the switching manner or the aggregation manner. In an implementation, that the terminal device determines, based on the first route selection parameter, the PDU session for transmission of the first data flow may include: The terminal device sends the PDU session establishment request message to a second network device based on the first parameter, to establish a plurality of PDU sessions, where the plurality of PDU sessions are for transmission of the first data flow in the first manner. Optionally, a quantity of PDU session establishment request messages is equal to a quantity of PDU sessions. One PDU session establishment request message may be used to establish one PDU session, and the terminal device may send a plurality of PDU session establishment request messages to establish a plurality of PDU sessions. Optionally, if the first manner is the aggregation manner, the PDU session establishment request message may include indication information indicating the aggregation manner. In this way, the second network device that receives the PDU session establishment request message can aggregate data on the plurality of PDU sessions based on the indication information indicating the aggregation manner. Optionally, if the first manner is the switching manner, the PDU session establishment request message may include or not include indication information indicating the switching manner. The terminal device may switch between the plurality of PDU sessions based on an implementation of the terminal device to perform transmission of the first data flow.

Optionally, in Case 2 in S410, if the first parameter indicates that transmission of the data flow is performed via the plurality of PDU sessions, that the terminal device determines, based on the first route selection parameter, the PDU session for transmission of the first data flow may include: sending the PDU session establishment request message to the second network device, where the PDU session establishment request message includes second indication information, and the second indication information indicates that transmission of the first data flow is performed via the plurality of PDU sessions. The second network device sends a response message of the PDU session establishment request message to the terminal device, where the response message of the PDU session establishment request message includes third indication information, the third indication information indicates the first manner of transmission of the first data flow via the plurality of PDU sessions, and the first manner is the switching manner or the aggregation manner. In other words, when the first parameter indicates that transmission of the data flow is performed via the plurality of PDU sessions, the PDU session establishment request message sent by the terminal device to the second network device includes the second indication information. The second network device determines, based on the second indication information, that the terminal device performs transmission of the first data flow via the plurality of PDU sessions. The second network device determines that the first manner is the switching manner or the aggregation manner, and indicates the first manner in the third indication information in the response message of the PDU session establishment request message. Optionally, the PDU session establishment request message may include indication information indicating the protocol corresponding to the first data flow. The second network device may determine, according to the protocol corresponding to the first data flow, that the first manner is the switching manner or the aggregation manner. For example, if the protocol corresponding to the first data flow is the QUIC, the second network device may determine that the first manner is the switching manner; or if the protocol corresponding to a second data flow is the UDP or the TCP, the second network device may determine that the first manner is the aggregation manner. Optionally, the second network device may obtain whether the first data flow has the session and service continuity requirement. If determining that the first data flow has the session and service continuity requirement, the second network device determines, according to the protocol corresponding to the first data flow, whether the first manner is the switching manner or the aggregation manner.

Optionally, if the first manner is the aggregation manner, the communication method further includes: The terminal device may perform transmission of a part of data of the first data flow on a part of the plurality of PDU sessions, and the terminal device may perform transmission of a remaining part of data of the first data flow on a remaining part of the plurality of PDU sessions. In this way, reliability of transmission of the first data flow can be improved. Optionally, if the first manner is the switching manner, transmission of the first data flow is performed by switching between the plurality of PDU sessions based on session quality of the plurality of PDU sessions, so that reliability of transmission of the first data flow can be improved.

Optionally, the second network device may be an SMF, and the terminal device may send the PDU session establishment request message to the SMF via the AMF.

Optionally, the second network device in the method 400 may be the SMF, and the terminal device may separately send a plurality of PDU session establishment request messages to the SMF via the AMF. In this way, the SMF can separately establish a plurality of PDU sessions based on the plurality of PDU session establishment request messages.

Optionally, for Case 3 in S410, the first route selection parameter includes the SSC mode and the first parameter. That the terminal device determines, based on the first route selection parameter, the PDU session for transmission of the first data flow includes: The terminal device establishes a plurality of PDU sessions based on the SSC mode and the first parameter, where SSC modes of all of the plurality of PDU sessions are the same. Optionally, the SSC mode is the mode 3 or the mode 1. The first parameter may indicate that transmission of the data flow is performed via the plurality of PDU sessions, or the first parameter may indicate the first manner of transmission of the data flow via the plurality of PDU sessions, where the first manner may be the switching manner or the aggregation manner. Optionally, if the first parameter indicates that transmission of the data flow is performed via the plurality of PDU sessions, that the terminal device establishes the plurality of PDU sessions based on the SSC mode and the first parameter includes: The terminal device sends a plurality of PDU session establishment request messages to the second network device, where each PDU session establishment request message includes the SSC mode and the second indication information, and the second indication information indicates that transmission of the first data flow is performed via the plurality of PDU sessions. The second network device sends response messages of the plurality of PDU session establishment request messages to the terminal device, where each response message includes the third indication information, and the third indication information indicates the first manner of transmission of the first data flow via the plurality of PDU sessions. The terminal device establishes the plurality of PDU sessions in the first manner, and the second network device establishes the plurality of PDU sessions based on the SSC mode, where one PDU session establishment request message corresponds to one PDU session. Optionally, if the first parameter indicates the first manner of transmission of the data flow via the plurality of PDU sessions, that the terminal device establishes the plurality of PDU sessions based on the SSC mode and the first parameter includes: The terminal device sends a plurality of PDU session establishment request messages to the second network device, where each PDU session establishment request message includes the SSC mode and indication information indicating the first manner. The second network device may establish the plurality of PDU sessions with the terminal device based on the SSC mode and the indication information indicating the first manner, where when the first manner is the aggregation manner, the PDU session establishment request message may include the indication information indicating the first manner; or when the first manner is the switching manner, the PDU session establishment request message may not include or may include the indication information indicating the first manner; and one PDU session establishment request message corresponds to one PDU session. In the method 400, the first network device may be the PCF, the second network device may be the SMF, and the terminal device may send the PDU session establishment request message to the SMF via the AMF.

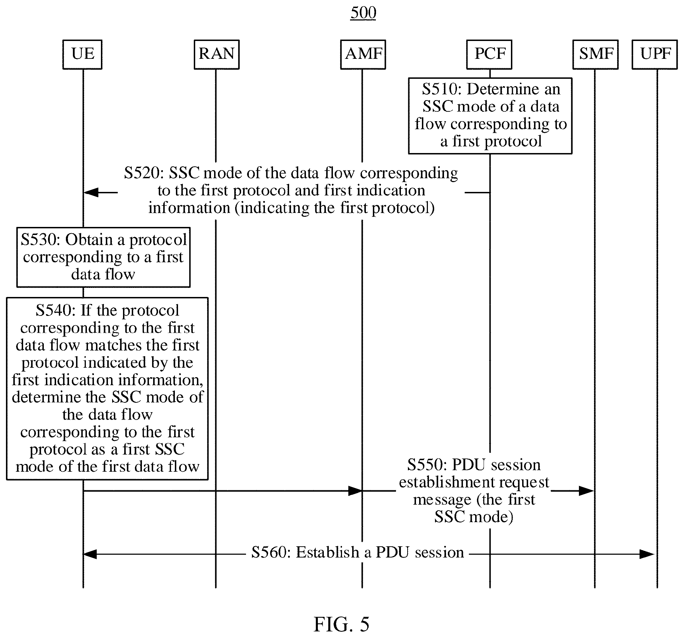

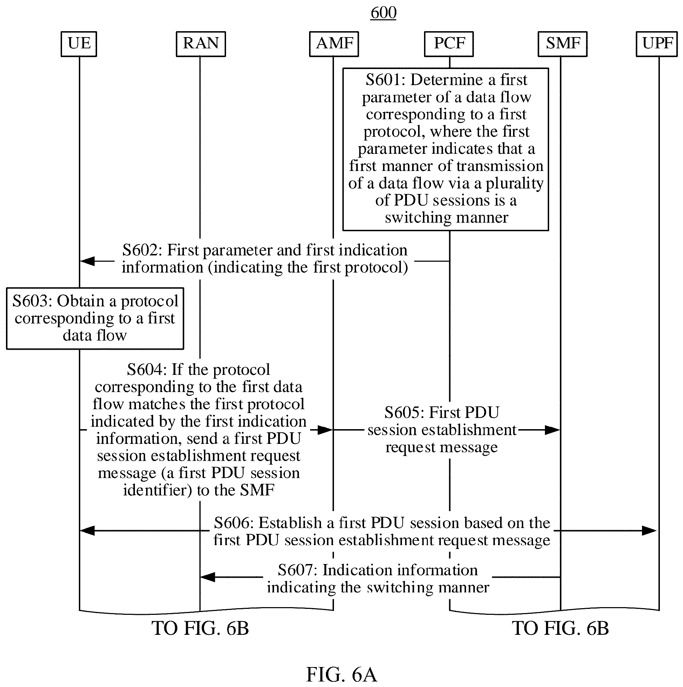

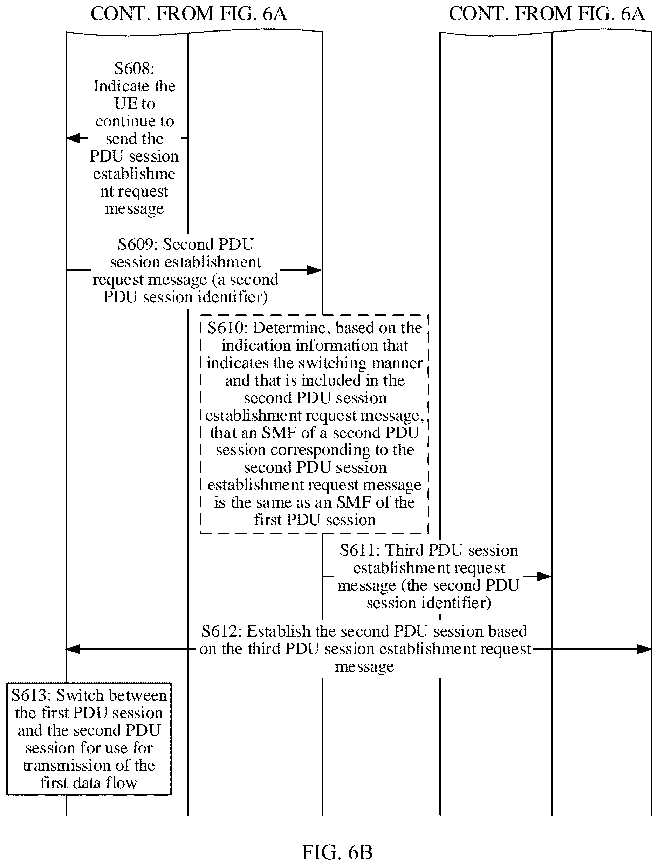

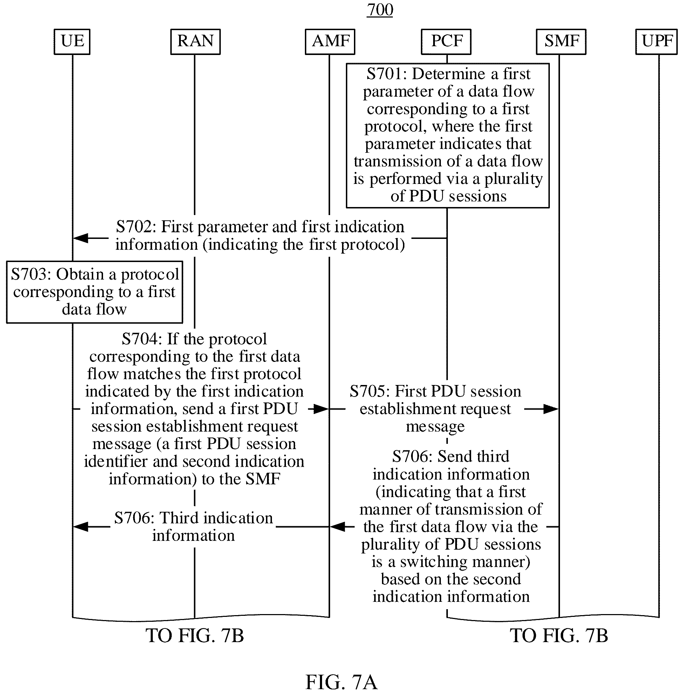

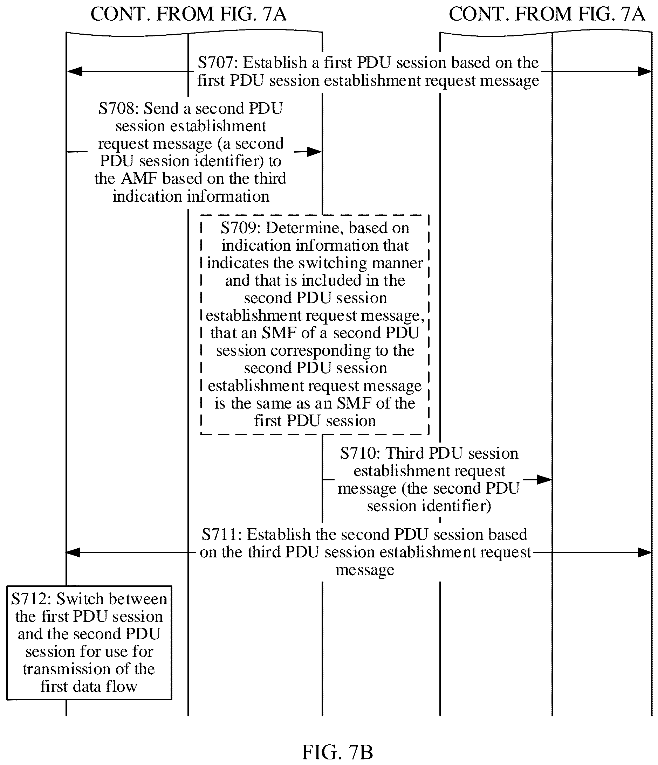

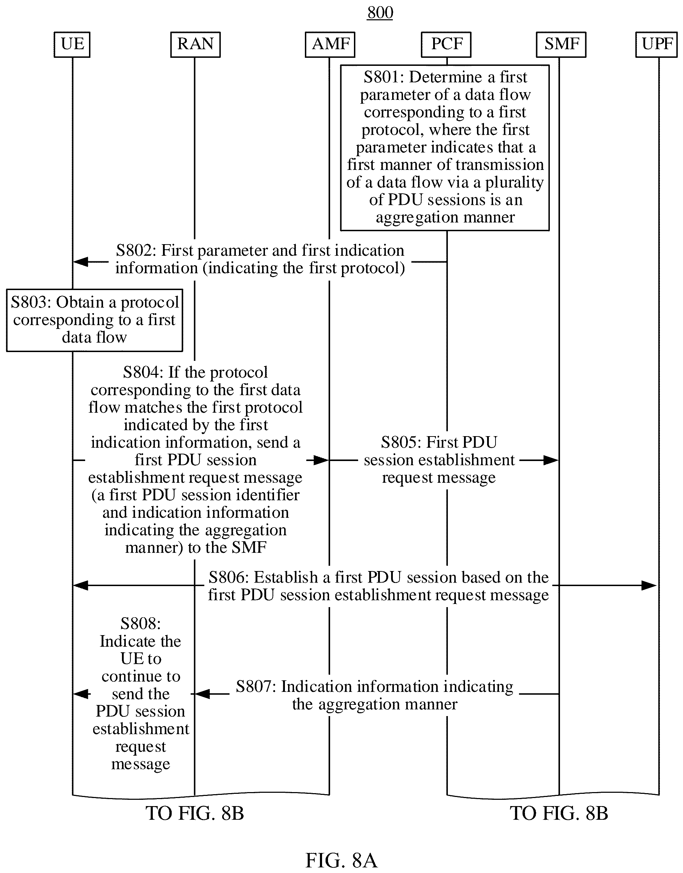

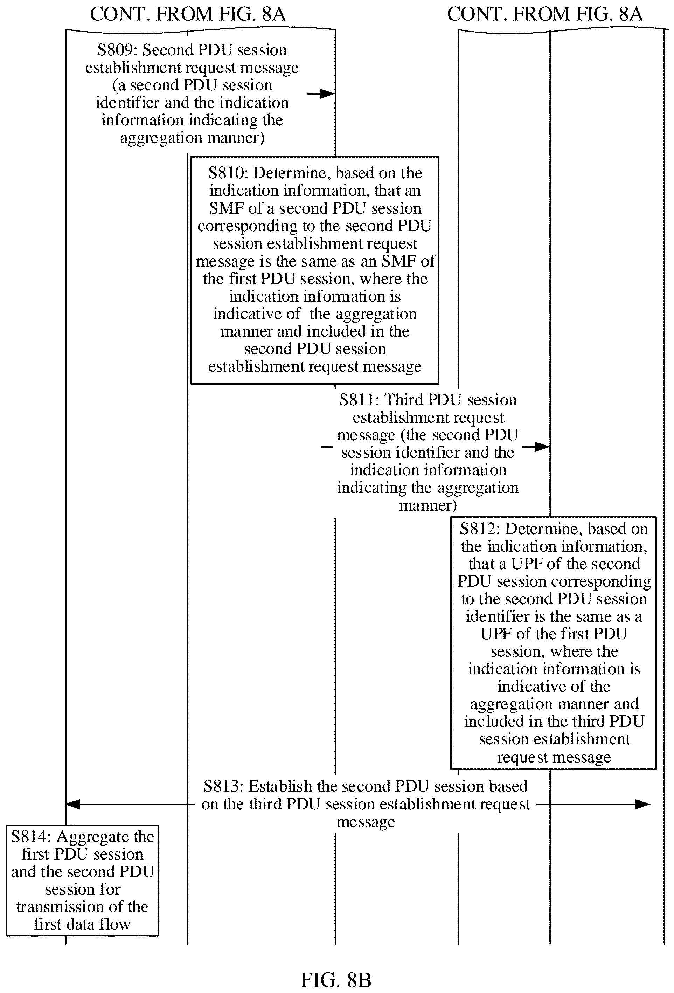

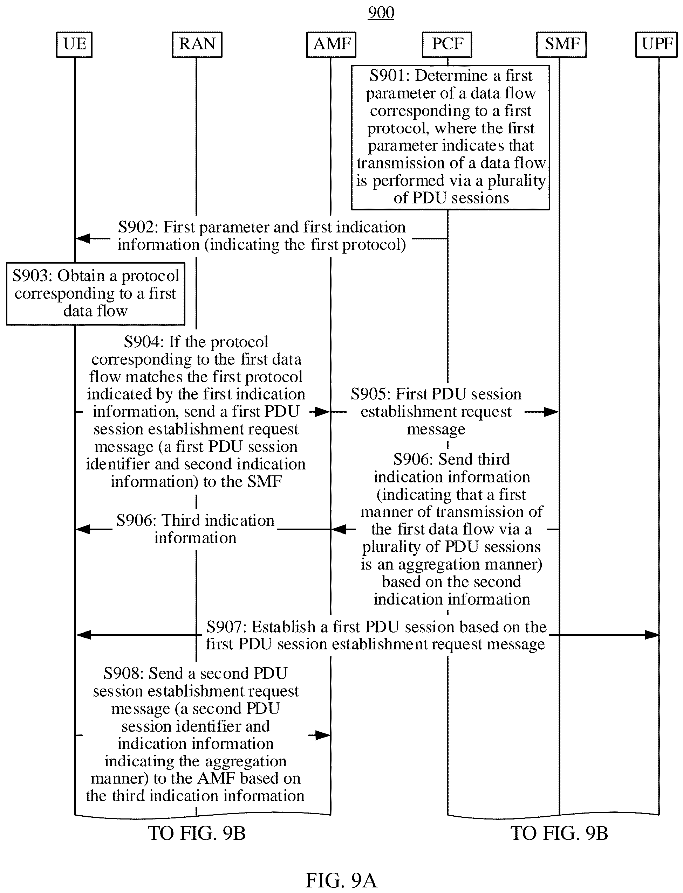

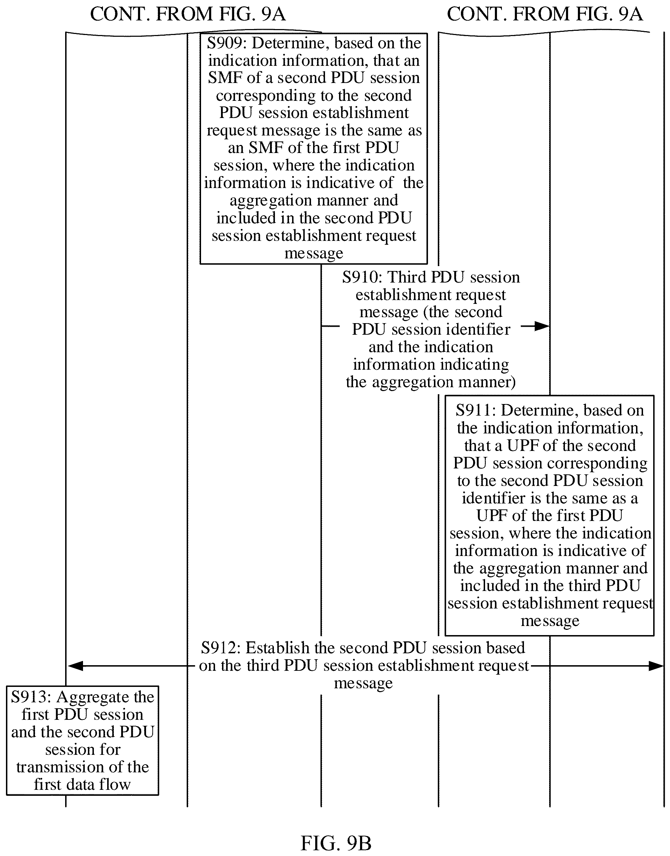

The following specifically describes methods in embodiments of this application with reference to FIG. 5 to FIG. 9A and FIG. 9B. FIG. 5 shows Case 1 in S410 in which the first route selection parameter includes the SSC mode. FIG. 6A and FIG. 6B show Case 2 or Case 3 in which the first route selection parameter includes the first parameter, and the first parameter indicates that the first manner of transmission of the first data flow via the plurality of PDU sessions is the switching manner. FIG. 7A and FIG.7B show Case 2 or Case 3 in which the first route selection parameter includes the first parameter, the first parameter indicates that transmission of the data flow is performed via the plurality of PDU sessions, and the second network device indicates that the first manner of transmission of the data flow via the plurality of PDU sessions is the switching manner. FIG. 8A and FIG. 8B show Case 2 or Case 3 in which the first route selection parameter includes the first parameter, and the first parameter indicates that the first manner of transmission of the first data flow via the plurality of PDU sessions is the aggregation manner. FIG. 9A and FIG. 9B show Case 2 or Case 3 in which the first route selection parameter includes the first parameter, the first parameter indicates that transmission of the data flow is performed via the plurality of PDU sessions, and the second network device indicates that the first manner of transmission of the data flow via the plurality of PDU sessions is the aggregation manner. FIG. 5 to FIG. 9A and FIG. 9B are described by using an example in which a plurality of PDU sessions are two PDU sessions, a terminal device is UE, a first network device is a PCF, and a second network device is an SMF. As shown in FIG. 5, a method 500 includes the following steps.

S510: The PCF determines an SSC mode of a data flow corresponding to a first protocol.

For descriptions of S510, refer to the descriptions related to the SSC mode in Case 1 in S410. To avoid repetition, details are not described.

S520: The PCF sends the SSC mode of the data flow corresponding to the first protocol and first indication information to UE, and the UE receives the SSC mode of the data flow corresponding to the first protocol, where the first indication information indicates the first protocol, and the SSC mode is a mode 1 or a mode 3.

Optionally, S520 includes: The PCF sends a first route selection policy to the UE, and the UE receives the first route selection policy including the SSC mode of the data flow corresponding to the first protocol and the first indication information.

Optionally, S520 includes: The PCF sends the first route selection policy to the UE via an AMF, and the UE receives the first route selection policy via the AMF.

Optionally, a first RSD in the first route selection policy includes the SSC mode of the data flow corresponding to the first protocol.

Optionally, in S510, the PCF may determine at least one route selection policy. Specifically, for descriptions of the at least one route policy, refer to the descriptions in the method 400.

Optionally, in S520, the PCF may simultaneously send the SSC mode of the data flow corresponding to the first protocol and the first indication information to the UE, or may separately send the SSC mode of the data flow corresponding to the first protocol and the first indication information.

S530: The UE obtains a protocol corresponding to a first data flow.

S540: If the protocol corresponding to the first data flow matches the first protocol indicated by the first indication information, the UE determines the SSC mode of the data flow corresponding to the first protocol as a first SSC mode of the first data flow.

Optionally, if the PCF sends the at least one route policy, for a manner in which the UE determines the first route selection policy from the at least one route selection policy, refer to the descriptions in the method 400. To avoid repetition, details are not described.

Optionally, if the first route selection policy includes at least one RSD, the UE may determine the first RSD from the at least one RSD, and determine an SSC mode in the first RSD as the first SSC mode of the first data flow. In other words, if the first route selection policy includes one RSD, the RSD is the first RSD, and the SSC mode in the first RSD is the first SSC mode of the first data flow. If the first route selection policy includes a plurality of RSDs, an RSD with highest RSD precedence in the plurality of RSDs may be determined as the first RSD, and the SSC mode in the first RSD is the first SSC mode of the first data flow.

S550: The UE sends a PDU session establishment request message to the SMF via the AMF, and the SMF receives the PDU session establishment request message. The PDU session establishment request message includes the first SSC mode.

For example, the first SSC mode may be the mode 1 or the mode 3. Optionally, the PDU session request message may include indication information indicating the first SSC mode.

Optionally, a first route selection parameter may further include another parameter. For example, the UE may further determine another parameter in the first route selection policy, for example, may determine one or more of domain descriptors, DNN selection (for example, a value of a DNN), network slice selection (for example, single network slice selection assistance information (single network slice selection assistance information, S-NSSAI)), or PDU session type selection. A parameter included in a PDU session establishment request is not limited in this embodiment of this application.

S560: The SMF establishes a PDU session based on the PDU session establishment request message.

Optionally, for Case 1 or Case 3 in S410, if a first route selection parameter includes the first SSC mode, S560 includes: The SMF establishes the PDU session based on the first SSC mode.

Optionally, for Case 2 or Case 3 in S410, in FIG. 6A and FIG. 6B, a first route selection parameter includes a first parameter, and the first parameter indicates that a first manner of transmission of a data flow via two PDU sessions is a switching manner. In FIG. 7A and FIG.7B, a first route selection parameter includes a first parameter, and the first parameter indicates that transmission of a data flow is performed via two PDU sessions; the SMF determines that a first manner of transmission of a first data flow via the two PDU sessions is a switching manner; and the SMF indicates, based on third indication information, the UE that the first manner of transmission of the first data flow via the two PDU sessions is the switching manner.

As shown in FIG. 6A and FIG. 6B, a method 600 includes the following steps.

S601: The PCF determines a first parameter of a data flow corresponding to a first protocol, where the first parameter indicates that a first manner of transmission of a data flow via a plurality of PDU sessions is a switching manner.

For descriptions of S601, refer to the descriptions related to the switching manner in Case 2 or Case 3 in S410. To avoid repetition, details are not described.

Optionally, in S601, the PCF determines a first parameter of a data flow of a first application corresponding to the first protocol.

S602: The PCF sends the first parameter and first indication information to the UE, and the UE receives the first parameter and the first indication information, where the first indication information indicates the first protocol.

Optionally, S602 includes: The PCF sends a first route selection policy to the UE, and the UE receives the first route selection policy including the first indication information and the first parameter. Optionally, that the PCF sends the first route selection policy to the UE, and the UE receives the first route selection policy includes: The PCF sends the first route selection policy to the UE via an AMF, and the UE receives the first route selection policy via the AMF. Optionally, a first RSD in the first route selection policy includes the first parameter.

Optionally, in S601, the PCF may determine at least one route selection policy. Specifically, for descriptions of the at least one route policy, refer to the descriptions in the method 400.

Optionally, for Case 2 in S410, the first parameter indicates that a manner of transmission of the data flow via two PDU sessions is the switching manner. For Case 3 in S410, the method further includes: The PCF sends an SSC mode of the data flow corresponding to the first protocol to the UE, where the PCF may simultaneously send the SSC mode of the data flow corresponding to the first protocol, the first indication information, and the first parameter to the UE, or may separately send the SSC mode of the data flow corresponding to the first protocol, the first indication information, and the first parameter. Optionally, the first route selection policy sent by the PCF may include the first indication information, the first parameter, and the SSC mode of the data flow corresponding to the first protocol. The first RSD in the first route selection policy may include the first parameter and the SSC mode of the data flow corresponding to the first protocol.

S603 is the same as S503.

S604: If a protocol corresponding to a first data flow matches the first protocol indicated by the first indication information, the UE sends a first PDU session establishment request message to the AMF, and the AMF receives the first PDU session establishment request message, where the first PDU session establishment request message includes a first PDU session identifier.

The UE may determine, based on the first parameter, that a first manner of transmission of the first data flow via two PDU sessions is the switching manner. Therefore, the UE can send the first PDU session establishment request message to the AMF.

Optionally, the first PDU session establishment request message may further include or not include indication information indicating the switching manner.

The first PDU session identifier is allocated by the UE for the first PDU session establishment request message. In other words, before initiating to establish a first PDU session, the UE may allocate the first PDU session identifier to the first PDU session.

Optionally, in Case 3 in S410, the first PDU session establishment request message may include the first PDU session identifier and indication information indicating a first SSC mode. For example, the first SSC mode may be a mode 1 or a mode 3. Optionally, the first PDU session request message may include the indication information indicating the switching manner, the indication information indicating the first SSC mode, and the first PDU session identifier.

Optionally, the first PDU session establishment request message may further include another parameter. For example, the UE may further determine another parameter in the first route selection policy, for example, may determine one or more of domain descriptors, DNN selection (for example, a value of a DNN), network slice selection (for example, S-NSSAI), or PDU session type selection. A parameter included in a first PDU session establishment request is not limited in this embodiment of this application.

Optionally, if the PCF sends the at least one route policy, before S604, the UE may determine the first route selection policy from the at least one route selection policy. For a manner in which the UE may determine the first route selection policy from the at least one route selection policy, refer to the descriptions in the method 400. To avoid repetition, details are not described.

Optionally, if the first route selection policy includes at least one RSD, before S604, the UE may determine the first RSD from the at least one RSD. In Case 2 in S410, the UE determines, based on the first parameter in the first RSD, that the first manner of transmission of the first data flow via the two PDU sessions is the switching manner. The first RSD includes the first parameter and the SSC mode of the data flow corresponding to the first protocol. The UE determines that the SSC mode that is of the data flow corresponding to the first protocol and that is in the first RSD is the first SSC mode of the first data flow, and determines, based on the first parameter in the first RSD, that the first manner of transmission of the first data flow via the two PDU sessions is the switching manner. Optionally, if the first route selection policy includes one RSD, the RSD is the first RSD. If the first route selection policy includes a plurality of RSDs, the UE may determine an RSD with highest RSD precedence from the plurality of RSDs as the first RSD.

In this embodiment of this application, the data flow corresponding to the first protocol may be one or more data flows, in other words, a data flow of which transmission is performed by using the first protocol may be referred to as the data flow corresponding to the first protocol. The protocol corresponding to the first data flow may mean transmission of the first data flow by using or employing the protocol. There is usually one protocol corresponding to the first data flow, and there may be one or more data flows corresponding to the first protocol.

S605: The AMF sends the first PDU session establishment request message to the SMF, and the SMF receives the first PDU session establishment request message from the AMF.

The first PDU session establishment request message in S605 is the same as the first PDU session establishment request message in S604. In S605, the AMF may directly forward the first PDU session establishment request message to the SMF without parsing the first PDU session establishment request message.

S606: The SMF establishes the first PDU session based on the first PDU session establishment request message.

Another network element may participate in a process of establishing the first PDU session. For example, network elements such as a UPF and the AMF may also participate in establishing the first PDU session.

Optionally, after the PCF determines that the first parameter indicates that the first manner of transmission of the data flow via the plurality of PDU sessions is the switching manner in S601, the PCF may indicate the first parameter to the SMF. In this case, after S606, the SMF may perform S607 based on the first parameter, in other words, the SMF may send, to a RAN based on the first parameter from the PCF, the indication information indicating the switching manner, so that the RAN indicates the UE to continue to send the PDU session establishment request message.

S607: The SMF sends, to the RAN, the indication information indicating the switching manner, and the RAN receives, from the SMF, the indication information indicating the switching manner.

If the first PDU session establishment request message in S604 and S605 includes the indication information indicating the switching manner, S607 may exist. If the first PDU session establishment request message in S604 and S605 does not include the indication information indicating the switching manner, S607 may not exist.

It should be noted that there is no limitation on a sequence of S606 and S607, and S606 may be performed before or after S607, or S606 and S607 may be performed simultaneously.

S608: The RAN indicates, based on the indication information indicating the switching manner, the UE to continue to send the PDU session establishment request message.

Optionally, that the RAN indicates, based on the indication information indicating the switching manner, the UE to continue to send the PDU session establishment request message includes: The RAN may directly send, to the UE, the indication information indicating the switching manner, to indicate the UE to continue to send the PDU session establishment request message.

In other words, when the RAN determines, based on the indication information indicating the switching manner, that the first manner of transmission of the first data flow via the two PDU sessions is the switching manner, the RAN may indicate the UE to continue to send the PDU session establishment request message. In this way, the UE can be triggered to perform S609. In other words, because the RAN determines, based on the indication information indicating the switching manner, that the first manner of transmission of the first data flow via the two PDU sessions is the switching manner, it indicates that two PDU sessions need to exist for switching. Therefore, the RAN needs to indicate the UE to continue to send the PDU session establishment request message, to trigger the UE to continue to initiate a PDU session establishment procedure.

Optionally, the RAN may directly or indirectly indicate the UE to continue to send the PDU session establishment request message. For example, in the method 600, the RAN is a primary RAN, and the primary RAN may configure configuration information of a secondary RAN. The UE may determine, based on the configuration information that is for configuring the secondary RAN and that is sent by the primary RAN, that the primary RAN expects the UE to continue to access the secondary RAN. Therefore, the UE needs to continue to initiate the PDU session establishment procedure. Therefore, the UE can perform S609.

In some scenarios, S607 and S608 may not exist. After S606, the UE may receive a PDU session establishment complete message, where the PDU session establishment complete message indicates that establishment of the first PDU session is completed. After receiving the PDU session establishment complete message, the UE may perform S609.

S609: The UE sends a second PDU session establishment request message to the AMF, and the AMF receives the second PDU session establishment request message from the UE, where the second PDU session establishment request message includes a second PDU session identifier.

Optionally, the second PDU session establishment request message may further include or not include the indication information indicating the switching manner.

The second PDU session identifier is allocated by the UE for the second PDU session establishment request message. In other words, before initiating to establish a second PDU session, the UE may allocate the second PDU session identifier to the second PDU session. The first PDU session identifier is different from the second PDU session identifier.

Optionally, in Case 3 in S410, the second PDU session establishment request message may include the second PDU session identifier and the indication information indicating the first SSC mode. For example, the first SSC mode may be the mode 1 or the mode 3. The indication information that indicates the first SSC mode and that is included in the first PDU session establishment request message, and the indication information that indicates the first SSC mode and that is included in the second PDU session establishment request message are the same. For example, both the first SSC modes are the mode 3 or the mode 1. Optionally, the second PDU session request message may include the indication information indicating the switching manner, the indication information indicating the first SSC mode, and the second PDU session identifier.

Optionally, the second PDU session establishment request message may further include another parameter. For example, the UE may further determine another parameter in the first route selection policy, for example, may determine one or more of domain descriptors, DNN selection (for example, a value of a DNN), network slice selection (for example, S-NSSAI), or PDU session type selection. A parameter included in the PDU session establishment request is not limited in this embodiment of this application.

Optionally, if the second PDU session establishment request message includes the indication information indicating the switching manner, the method 600 may further include S610.

S610: The AMF determines, based on the indication information that indicates the switching manner and that is included in the second PDU session establishment request message, that an SMF of the second PDU session corresponding to the second PDU session establishment request message is the same as the SMF of the first PDU session.

In other words, if the AMF determines, based on the indication information indicating the switching manner, that the first manner of transmission of the first data flow via the two PDU sessions is the switching manner, one SMF is needed to control switching between the two PDU sessions. If two different SMFs control switching between the two PDU sessions, the two different SMFs cannot well control switching between the two PDU sessions. Therefore, it needs to be ensured that SMFs corresponding to the two PDU sessions are a same network element.

Optionally, in some cases, S610 may not exist. If interval duration between sending the first PDU session establishment request message by the UE and sending the second PDU session establishment request message by the UE is less than preset duration, it indicates that the UE needs to perform transmission of the first data flow by switching between the plurality of PDU sessions. Therefore, the AMF can determine that the SMF of the second PDU session corresponding to the second PDU session establishment request message is the same as the SMF of the first PDU session.

S611: The AMF sends a third PDU session establishment request message to the SMF, and the SMF receives the third PDU session establishment request message from the AMF, where the third PDU session establishment request message may include the second PDU session identifier.

Optionally, the third PDU session establishment request message and the second PDU session establishment request message may include a same parameter. Optionally, if the second PDU session establishment request includes the indication information indicating the switching manner, the third PDU session establishment request message may also include the indication information indicating the switching manner. Optionally, if the second PDU session establishment request message includes the indication information indicating the first SSC mode, the third PDU session establishment request may also include the indication information indicating the first SSC mode.

Optionally, the third PDU session establishment request message and the second PDU session establishment request message include different parameters. For example, if the second PDU session establishment request includes the indication information indicating the switching manner, the third PDU session establishment request message may not include the indication information indicating the switching manner.

S612: The SMF establishes the second PDU session based on the third PDU session establishment request message.

Optionally, when the third PDU session establishment request message includes the indication information indicating the switching manner, S611 includes: The SMF may select a UPF based on the indication information indicating the switching manner, and establish the second PDU session based on the selected UPF. The UPF selected by the SMF may be the same as or different from a UPF corresponding to the first PDU session. The UPF selected by the SMF is not limited in this embodiment of this application. In other words, in a scenario of switching between two PDU sessions, UPFs of the two PDU sessions may be a same UPF or different UPFs. When the UPFs of the two PDU sessions are the same UPF, switching between two PDU sessions of one UPF may be performed. When the UPFs of the two PDU sessions are different UPFs, switching between two PDU sessions of different UPFs may be performed. FIG. 6A and FIG. 6B show the case in which the UPFs of the two PDU sessions are the same UPF, and the scenario in which the two PDU sessions belong to different UPFs is not shown in FIG. 6A and FIG. 6B.

S613: The UE may switch between the first PDU session and the second PDU session for use to perform transmission of the first data flow.

Optionally, S613 includes: The UE selects, based on session quality of the first PDU session and session quality of the second PDU session, one PDU session to perform transmission of the first data flow. For example, if the session quality of the first PDU session is higher than the session quality of the second PDU session in a first period of time, the UE may perform transmission of the first data flow on the first PDU session; or if the session quality of the second PDU session is higher than the session quality of the first PDU session in a second period of time, the UE may perform transmission of the first data flow on the second PDU session.

Optionally, S613 includes: The UE may switch, according to a switching rule (switching rule), between the first PDU session and the second PDU session for use to perform transmission of the first data flow.

Optionally, S613 includes: The UE may switch between the first PDU session and the second PDU session for use to send the first data flow, or may switch between the first PDU session and the second PDU session for use to receive the first data flow. When the first data flow is the data flow corresponding to the first application, the UE may switch between the first PDU session and the second PDU session for use to perform transmission of the first data flow corresponding to the first application.

Optionally, if the RAN sends the configuration information of the secondary RAN to the UE in S608, in S613, with the help of the secondary RAN, the UE may also switch between the first PDU session and the second PDU session for use.

In the foregoing solution, the SMF may establish the first PDU session based on the first PDU session establishment request message. After the first PDU session is established, the RAN may indicate the UE to continue to send the PDU session establishment request message. The UE continues to send the second PDU session establishment request message to the SMF based on the indication of the RAN. The AMF may send the third PDU session establishment request message to the SMF based on the second PDU session establishment request message. The SMF establishes the second PDU session based on the third PDU session establishment request message. In this way, the UE can switch between the first PDU session and the second PDU session for use to perform transmission of the first data flow, so that reliability of transmission of the first data flow can be improved.

As shown in FIG. 7A and FIG.7B, a method 700 includes the following steps.

S701: The PCF determines a first parameter of a data flow corresponding to a first protocol, where the first parameter indicates that transmission of a data flow is performed via a plurality of PDU sessions.

For descriptions of S701, refer to the descriptions of Case 2 or Case 3 in S410. To avoid repetition, details are not described.

Optionally, in S701, the PCF determines a first parameter of a data flow of a first application corresponding to the first protocol.

S702: The PCF sends the first parameter and first indication information to the UE, and the UE receives the first parameter and the first indication information, where the first indication information indicates the first protocol.

Optionally, S702 includes: The PCF sends a first route selection policy to the UE, and the UE receives the first route selection policy including the first indication information and the first parameter. Optionally, that the PCF sends the first route selection policy to the UE, and the UE receives the first route selection policy includes: The PCF sends the first route selection policy to the UE via an AMF, and the UE receives the first route selection policy via the AMF. Optionally, a first RSD in the first route selection policy includes the first parameter.

Optionally, in S701, the PCF may determine at least one route selection policy. Specifically, for descriptions of the at least one route policy, refer to the descriptions in the method 400.

Optionally, for Case 2 in S410, the first parameter indicates that transmission of the data flow is performed via two PDU sessions. For Case 3 in S410, S702 further includes: The PCF sends an SSC mode of the data flow corresponding to the first protocol to the UE, where the PCF may simultaneously send the SSC mode of the data flow corresponding to the first protocol, the first indication information, and the first parameter to the UE, or may separately send the SSC mode of the data flow corresponding to the first protocol, the first indication information, and the first parameter. Optionally, the first route selection policy sent by the PCF may include the first indication information, the first parameter, and the SSC mode of the data flow corresponding to the first protocol. The first RSD in the first route selection policy may include the first parameter and the SSC mode of the data flow corresponding to the first protocol.

S703 is the same as S503.

S704: If a protocol corresponding to a first data flow matches the first protocol indicated by the first indication information, the UE sends a first PDU session establishment request message to the AMF, and the AMF receives the first PDU session establishment request message. The first PDU session establishment request message includes a first PDU session identifier and second indication information, and the second indication information indicates that transmission of the first data flow is performed via the plurality of PDU sessions.

The UE may determine, based on the first parameter, to perform transmission of the first data flow via the two PDU sessions. Therefore, the UE can send the first PDU session establishment request message to the AMF.

The first PDU session identifier is allocated by the UE for the first PDU session establishment request message. In other words, before initiating to establish a first PDU session, the UE may allocate the first PDU session identifier to the first PDU session.

Optionally, in Case 3 in S410, the first PDU session establishment request message may include the first PDU session identifier, the second indication information, and indication information indicating a first SSC mode. For example, the first SSC mode may be a mode 1 or a mode 3.

Optionally, the first PDU session establishment request message may further include another parameter. For example, the UE may further determine another parameter in the first route selection policy, for example, may determine one or more of domain descriptors, DNN selection (for example, a value of a DNN), network slice selection (for example, S-NSSAI), or PDU session type selection. A parameter included in a first PDU session establishment request is not limited in this embodiment of this application.

Optionally, if the PCF sends the at least one route policy, before S704, the UE may determine the first route selection policy from the at least one route selection policy. For a manner in which the UE may determine the first route selection policy from the at least one route selection policy, refer to the descriptions in the method 400. To avoid repetition, details are not described.

Optionally, if the first route selection policy includes at least one RSD, before S704, the UE may determine the first RSD from the at least one RSD. In Case 2 in S410, the UE determines, based on the first parameter in the first RSD, to perform transmission of the first data flow via the two PDU sessions. The first RSD includes the first parameter and the SSC mode of the data flow corresponding to the first protocol. The UE determines that the SSC mode that is of the data flow corresponding to the first protocol and that is in the first RSD is the first SSC mode of the first data flow, and determines, based on the first parameter in the first RSD, to perform transmission of the first data flow via the two PDU sessions. Optionally, if the first route selection policy includes one RSD, the RSD is the first RSD. If the first route selection policy includes a plurality of RSDs, the UE may determine an RSD with highest RSD precedence from the plurality of RSDs as the first RSD.

In this embodiment of this application, the data flow corresponding to the first protocol may be one or more data flows, in other words, a data flow of which transmission is performed by using the first protocol may be referred to as the data flow corresponding to the first protocol. The protocol corresponding to the first data flow may mean transmission of the first data flow by using or employing the protocol. There is usually one protocol corresponding to the first data flow, and there may be one or more data flows corresponding to the first protocol.

S705: The AMF sends the first PDU session establishment request message to the SMF, and the SMF receives the first PDU session establishment request message from the AMF.

The first PDU session establishment request message in S705 is the same as the first PDU session establishment request message in S704. In S705, the AMF may directly forward the first PDU session establishment request message to the SMF without parsing the first PDU session establishment request message.

S706: The SMF sends third indication information to the UE via the AMF based on the second indication information in the first PDU session establishment request message, and the UE receives the third indication information from the SMF via the AMF, where the third indication information indicates that a first manner of transmission of the first data flow via the plurality of PDU sessions is a switching manner.

Optionally, the first PDU session establishment request message may include indication information indicating the protocol corresponding to the first data flow. When determining, based on the second indication information, that the UE performs transmission of the first data flow via the plurality of PDU sessions, the SMF may determine, according to the protocol corresponding to the first data flow, that the first manner is the switching manner. In other words, the SMF determines the first manner of transmission of the first data via the plurality of PDU sessions. For example, the protocol corresponding to the first data flow is QUIC, and the SMF may determine that the first manner is the switching manner. Optionally, the SMF may obtain whether the first data flow has a session and service continuity requirement. If determining that the first data flow has the session and service continuity requirement, the SMF determines, according to the protocol corresponding to the first data flow, that the first manner is the switching manner. Optionally, the SMF may alternatively determine, in another manner, that the first manner is the switching manner. This is not limited in this embodiment of this application.

Optionally, S706 includes: The SMF may send a response message of the first PDU session establishment request message to the UE via the AMF, where the response message of the first PDU session establishment request message may include the third indication information.

S707: The SMF establishes the first PDU session based on the first PDU session establishment request message.

Another network element may participate in a process of establishing the first PDU session. For example, network elements such as a UPF and the AMF may also participate in establishing the first PDU session.

It should be noted that there is no limitation on a sequence of S707 and S706, and S707 may be performed before or after S706, or S706 and S707 may be performed simultaneously.

S708: The UE sends a second PDU session establishment request message to the AMF based on the third indication information, and the AMF receives the second PDU session establishment request message from the UE. The second PDU session establishment request message includes a second PDU session identifier.

Optionally, the second PDU session establishment request message may further include or not include indication information indicating the switching manner.

The second PDU session identifier is allocated by the UE for the second PDU session establishment request message. In other words, before initiating to establish a second PDU session, the UE may allocate the second PDU session identifier to the second PDU session. The first PDU session identifier is different from the second PDU session identifier.

Optionally, in Case 3 in S410, the second PDU session establishment request message may include the second PDU session identifier and the indication information indicating the first SSC mode. For example, the first SSC mode may be the mode 1 or the mode 3. Optionally, the second PDU session request message may include the indication information indicating the switching manner, the indication information indicating the first SSC mode, and the second PDU session identifier.

Optionally, the second PDU session establishment request message may further include another parameter. For example, the UE may further determine another parameter in the first route selection policy, for example, may determine one or more of domain descriptors, DNN selection (for example, a value of a DNN), network slice selection (for example, S-NSSAI), or PDU session type selection. A parameter included in a PDU session establishment request is not limited in this embodiment of this application.

Optionally, if the second PDU session establishment request message includes the indication information indicating the switching manner, the method 700 may further include S709.

S709 is the same as S610.

S710 to S712 are respectively the same as S611 to S613.

Optionally, for Case 2 or Case 3 in S410, in FIG. 8A and FIG. 8B, a first route selection parameter includes a first parameter, and the first parameter indicates that a first manner of transmission of a data flow via two PDU sessions is an aggregation manner. In FIG. 9A and FIG. 9B, a first route selection parameter includes a first parameter, and the first parameter indicates that transmission of a data flow is performed via two PDU sessions; an SMF determines that a first manner of transmission of a first data flow via the two PDU sessions is an aggregation manner; and the SMF indicates, based on third indication information, UE that the first manner of transmission of the first data flow via the two PDU sessions is the aggregation manner.

As shown in FIG. 8A and FIG. 8B, a method 800 includes the following steps.

S801: The PCF determines a first parameter of a data flow corresponding to a first protocol, where the first parameter indicates that a first manner of transmission of a data flow via a plurality of PDU sessions is an aggregation manner.

For descriptions of S801, refer to the descriptions in Case 2 or Case 3 in S410. To avoid repetition, details are not described.

Optionally, in S801, the PCF determines a first parameter of a data flow of a first application corresponding to the first protocol.

S802: The PCF sends the first parameter and first indication information to the UE, and the UE receives the first parameter and the first indication information, where the first indication information indicates the first protocol. The first parameter indicates that the first manner of transmission of the data flow via the plurality of PDU sessions is the aggregation manner.

Optionally, S802 includes: The PCF sends a first route selection policy to the UE, and the UE receives the first route selection policy including the first indication information and the first parameter. Optionally, that the PCF sends the first route selection policy to the UE, and the UE receives the first route selection policy includes: The PCF sends the first route selection policy to the UE via an AMF, and the UE receives the first route selection policy via the AMF. Optionally, a first RSD in the first route selection policy includes the first parameter.

Optionally, in S601, the PCF may determine at least one route selection policy. Specifically, for descriptions of the at least one route policy, refer to the descriptions in the method 400.

Optionally, for Case 2 in S410, the first parameter indicates that a manner of transmission of the data flow via two PDU sessions is the aggregation manner. For Case 3 in S410, the method further includes: The PCF sends an SSC mode of the data flow corresponding to the first protocol to the UE, where the PCF may simultaneously send the SSC mode of the data flow corresponding to the first protocol, the first indication information, and the first parameter to the UE, or may separately send the SSC mode of the data flow corresponding to the first protocol, the first indication information, and the first parameter. Optionally, the first route selection policy sent by the PCF may include the first indication information, the first parameter, and the SSC mode of the data flow corresponding to the first protocol. The first RSD in the first route selection policy may include the first parameter and the SSC mode of the data flow corresponding to the first protocol.

S803 is the same as S503.

S804: If a protocol corresponding to a first data flow matches the first protocol indicated by the first indication information, the UE sends a first PDU session establishment request message to the AMF, and the AMF receives the first PDU session establishment request message. The first PDU session establishment request message includes a first PDU session identifier and indication information indicating the aggregation manner.

The UE may determine, based on the first parameter, that the first manner of transmission of the first data flow via the two PDU sessions is the aggregation manner. Therefore, the UE can send the first PDU session establishment request message to the AMF.

The first PDU session identifier is allocated by the UE for the first PDU session establishment request message. In other words, before initiating to establish a first PDU session, the UE may allocate the first PDU session identifier to the first PDU session.

Optionally, in Case 3 in S410, the first PDU session establishment request message may include the indication information indicating the aggregation manner, the first PDU session identifier, and indication information indicating a first SSC mode. For example, the first SSC mode may be a mode 1 or a mode 3.

Optionally, the first PDU session establishment request message may further include another parameter. For example, the UE may further determine another parameter in the first route selection policy, for example, may determine one or more of domain descriptors, DNN selection (for example, a value of a DNN), network slice selection (for example, S-NSSAI), or PDU session type selection. A parameter included in a first PDU session establishment request is not limited in this embodiment of this application.

Optionally, if the PCF sends the at least one route policy, before S804, the UE may determine the first route selection policy from the at least one route selection policy. For a manner in which the UE may determine the first route selection policy from the at least one route selection policy, refer to the descriptions in the method 400. To avoid repetition, details are not described.

Optionally, if the first route selection policy includes at least one RSD, before S804, the UE may determine the first RSD from the at least one RSD. In Case 2 in S410, the UE determines, based on the first parameter in the first RSD, that the first manner of transmission of the first data flow via the two PDU sessions is the aggregation manner. The first RSD includes the first parameter and the SSC mode of the data flow corresponding to the first protocol. The UE determines that the SSC mode that is of the data flow corresponding to the first protocol and that is in the first RSD is the first SSC mode of the first data flow, and determines, based on the first parameter in the first RSD, that the first manner of transmission of the first data flow via the two PDU sessions is a switching manner. Optionally, if the first route selection policy includes one RSD, the RSD is the first RSD. If the first route selection policy includes a plurality of RSDs, the UE may determine an RSD with highest RSD precedence from the plurality of RSDs as the first RSD.

In this embodiment of this application, the data flow corresponding to the first protocol may be one or more data flows, in other words, a data flow of which transmission is performed by using the first protocol may be referred to as the data flow corresponding to the first protocol. The protocol corresponding to the first data flow may mean transmission of the first data flow by using or employing the protocol. There is usually one protocol corresponding to the first data flow, and there may be one or more data flows corresponding to the first protocol.

S805: The AMF sends the first PDU session establishment request message to the SMF, and the SMF receives the first PDU session establishment request message from the AMF.

The first PDU session establishment request message in S805 is the same as the first PDU session establishment request message in S604. In S805, the AMF may directly forward the first PDU session establishment request message to the SMF without parsing the first PDU session establishment request message.

S806: The SMF establishes the first PDU session based on the first PDU session establishment request message.

Another network element may participate in a process of establishing the first PDU session. For example, network elements such as a UPF and the AMF may also participate in establishing the first PDU session.

Optionally, after the PCF determines that the first parameter indicates that the first manner of transmission of the data flow via the plurality of PDU sessions is the aggregation manner in S801, the PCF may indicate the first parameter to the SMF. In this case, after S806, the SMF may perform S807 based on the first parameter, in other words, the SMF may send, to a RAN based on the first parameter from the PCF, the indication information indicating the aggregation manner, so that the RAN indicates the UE to continue to send the PDU session establishment request message.

S807: The SMF sends, to the RAN, the indication information indicating the aggregation manner, and the RAN receives, from the SMF, the indication information indicating the aggregation manner.

The indication information indicating the aggregation manner in S807 may be in the first PDU session establishment request message.

It should be noted that there is no limitation on a sequence of S806 and S807, and S806 may be performed before or after S807, or S806 and S807 may be performed simultaneously.

S808: The RAN indicates, based on the indication information indicating the aggregation manner, the UE to continue to send the PDU session establishment request message.

Optionally, that the RAN indicates, based on the indication information indicating the aggregation manner, the UE to continue to send the PDU session establishment request message includes: The RAN may directly send, to the UE, the indication information indicating the aggregation manner, to indicate the UE to continue to send the PDU session establishment request message.

In other words, when the RAN determines, based on the indication information indicating the aggregation manner, that the first manner of transmission of the first data flow via the two PDU sessions is the aggregation manner, the RAN may indicate the UE to continue to send the PDU session establishment request message. In this way, the UE can be triggered to perform S809. In other words, because the RAN determines, based on the indication information indicating the aggregation manner, that the first manner of transmission of the first data flow via the two PDU sessions is the aggregation manner, it indicates that two PDU sessions need to exist for aggregation. Therefore, the RAN needs to indicate the UE to continue to send the PDU session establishment request message, to trigger the UE to continue to initiate a PDU session establishment procedure.

Optionally, the RAN may directly or indirectly indicate the UE to continue to send the PDU session establishment request message. For example, in the method 800, the RAN is a primary RAN, and the primary RAN may configure configuration information of a secondary RAN. The UE may determine, based on the configuration information that is for configuring the secondary RAN and that is sent by the primary RAN, that the primary RAN expects the UE to continue to access the secondary RAN. Therefore, the UE needs to continue to initiate the PDU session establishment procedure. Therefore, the UE may perform S809.

In some scenarios, S807 and S808 may not exist. After S806, the UE may receive a PDU session establishment complete message, where the PDU session establishment complete message indicates that establishment of the first PDU session is completed. After receiving the PDU session establishment complete message, the UE may perform S809.

S809: The UE sends a second PDU session establishment request message to the AMF, and the AMF receives the second PDU session establishment request message from the UE, where the second PDU session establishment request message includes a second PDU session identifier and the indication information indicating the aggregation manner.

The second PDU session identifier is allocated by the UE for the second PDU session establishment request message. In other words, before initiating to establish a second PDU session, the UE may allocate the second PDU session identifier to the second PDU session. The first PDU session identifier is different from the second PDU session identifier.

Optionally, in Case 3 in S410, the second PDU session establishment request message may include the second PDU session identifier, the indication information indicating the aggregation manner, and the indication information indicating the first SSC mode. For example, the first SSC mode may be the mode 1 or the mode 3. The indication information that indicates the first SSC mode and that is included in the first PDU session establishment request message, and the indication information that indicates the first SSC mode and that is included in the second PDU session establishment request message are the same. For example, both the first SSC modes are the mode 3 or the mode 1.

Optionally, the second PDU session establishment request message may further include another parameter. For example, the UE may further determine another parameter in the first route selection policy, for example, may determine one or more of domain descriptors, DNN selection (for example, a value of a DNN), network slice selection (for example, S-NSSAI), or PDU session type selection. A parameter included in a PDU session establishment request is not limited in this embodiment of this application.

S810: The AMF determines, based on the indication information, that an SMF of the second PDU session corresponding to the second PDU session establishment request message is the same as an SMF of the first PDU session, where the indication information is indicative of the aggregation manner and included in the second PDU session establishment request message.

In other words, if the AMF determines, based on the indication information indicating the aggregation manner, that the first manner of transmission of the first data flow via the two PDU sessions is the aggregation manner, one SMF is needed to control aggregation of the two PDU sessions. If two different SMFs control aggregation of the two PDU sessions, the two different SMFs cannot well control aggregation of the two PDU sessions. Therefore, it needs to be ensured that SMFs corresponding to the two PDU sessions are a same network element.

S811: The AMF sends a third PDU session establishment request message to the SMF, and the SMF receives the third PDU session establishment request message from the AMF, where the third PDU session establishment request message may include the first PDU session identifier and the indication information indicating the aggregation manner.

The third PDU session establishment request message and the second PDU session establishment request message may include a same parameter.

S812: The SMF determines, based on the indication information that indicates the aggregation manner and that is in the third PDU session establishment request message, that a UPF of the second PDU session corresponding to the second PDU session identifier is the same as a UPF of the first PDU session.

In other words, the SMF may select, based on the indication information indicating the aggregation manner, a UPF that is the same as that of the first PDU session, and establish the second PDU session based on the selected UPF. In other words, in a scenario in which two PDU sessions are aggregated for use, UPFs of the two PDU sessions may be a same UPF, and the UPF may aggregate the two PDU sessions.

It may be understood that a PDU session corresponding to the second PDU session identifier and a PDU session corresponding to the second PDU session establishment request message (or the third PDU session establishment request message) are a same second PDU session.

S813: The SMF establishes the second PDU session based on the third PDU session establishment request message.

The UPFs corresponding to the first PDU session and the second PDU session are a same UPF.

Optionally, the SMF may send an aggregation rule (aggregation rule) to the UPF, and the UPF may receive the aggregation rule. The aggregation rule may specify a manner of aggregating two PDU sessions by the UPF.

S814: The UE and the UPF may aggregate the first PDU session and the second PDU session to perform transmission of the first data flow.

Optionally, S814 includes: The UPF may perform transmission of the first data flow with the UE by aggregating, according to the aggregation rule, the first PDU session and the second PDU session for use.

Optionally, S814 includes: The UE may route the first data flow to the first PDU session and the second PDU session for transmission, and the UPF aggregates service data of the first PDU session and the second PDU session and then sends the aggregated service data to a DN; and/or the UPF receives the first data flow from the DN, and the UPF routes, to the first PDU session and the second PDU session, the service data received from the DN.

Optionally, if the RAN indicates, by configuring the configuration information of the secondary RAN, the UE to continue to send the PDU session establishment request message in S808, in S814, with the help of the secondary RAN, the UE may also aggregate the first PDU session and the second PDU session for use.

In the foregoing solution, the UE may include, in the first PDU session establishment request sent for the first time, the indication information indicating the aggregation manner, and the SMF may establish the first PDU session based on the first PDU session establishment request message. The SMF may send, to the RAN, the indication information indicating the aggregation manner. The RAN indicates, based on the indication information indicating the aggregation manner, the UE to continue to send the PDU session establishment request message. The UE continues to send the second PDU session establishment request message based on the indication of the RAN, where the second PDU session establishment request message may also include the indication information indicating the aggregation manner. The AMF may determine, based on the indication information that indicates the aggregation manner and that is in the second PDU session establishment request message, that the SMFs of the two PDU sessions are the same. The SMF may determine the UPFs of the two PDU sessions based on the indication information that indicates the aggregation manner and that is in the third PDU session establishment request message, and the SMF establishes the second PDU session based on the third PDU session establishment request message. In this way, the UPF can aggregate the first PDU session and the second PDU session for use, to avoid a problem that costs of a server are high because the first data flow of which transmission is performed via the first PDU session and the first data flow of which transmission is performed via the second PDU session need to be aggregated on the server.

As shown in FIG. 9A and FIG. 9B, a method 900 includes the following steps.

S901 to S905 are respectively the same as S701 to S705.

S906: The SMF sends third indication information to the UE via an AMF based on second indication information in a first PDU session establishment request message, and the UE receives the third indication information from the SMF via the AMF, where the third indication information indicates that a first manner of transmission of a first data flow via a plurality of PDU sessions is an aggregation manner.

Optionally, the first PDU session establishment request message may include indication information indicating a protocol corresponding to the first data flow. When determining, based on the second indication information, that the UE performs transmission of the first data flow via the plurality of PDU sessions, the SMF may determine, according to the protocol corresponding to the first data flow, that the first manner is the aggregation manner. In other words, the SMF determines the first manner of transmission of the first data via the plurality of PDU sessions. For example, the protocol corresponding to the first data flow is TCP or UDP, and the SMF may determine that the first manner is the aggregation manner. Optionally, the SMF may obtain whether the first data flow has a session and service continuity requirement. If determining that the first data flow has the session and service continuity requirement, the SMF determines, according to the protocol corresponding to the first data flow, that the first manner is the aggregation manner. Optionally, the SMF may alternatively determine, in another manner, that the first manner is the aggregation manner. This is not limited in this embodiment of this application.

Optionally, S906 includes: The SMF may send a response message of the first PDU session establishment request message to the UE via the AMF, where the response message of the first PDU session establishment request message may include the third indication information.

S907: The SMF establishes a first PDU session based on the first PDU session establishment request message.

Another network element may participate in a process of establishing the first PDU session. For example, network elements such as a UPF and the AMF may also participate in establishing the first PDU session.

It should be noted that there is no limitation on a sequence of S907 and S906, and S907 may be performed before or after S906, or S906 and S907 may be performed simultaneously.

S908: The UE sends a second PDU session establishment request message to the AMF based on the third indication information, and the AMF receives the second PDU session establishment request message from the UE, where the second PDU session establishment request message includes a second PDU session identifier and indication information indicating the aggregation manner.

The second PDU session identifier is allocated by the UE for the second PDU session establishment request message. In other words, before initiating to establish a second PDU session, the UE may allocate the second PDU session identifier to the second PDU session. The first PDU session identifier is different from the second PDU session identifier.

Optionally, in Case 3 in S410, the second PDU session establishment request message may include the second PDU session identifier, the indication information indicating the aggregation manner, and indication information indicating a first SSC mode. For example, the first SSC mode may be a mode 1 or a mode 3.

Optionally, the second PDU session establishment request message may further include another parameter. For example, the UE may further determine another parameter in a first route selection policy, for example, may determine one or more of domain descriptors, DNN selection (for example, a value of a DNN), network slice selection (for example, S-NSSAI), or PDU session type selection. A parameter included in a PDU session establishment request is not limited in this embodiment of this application.

S909 to S913 are respectively the same as S810 to S814.

In the foregoing solution, the UE may include the second indication information in the first PDU session establishment request sent for the first time, where the second indication information indicates that transmission of the first data flow is performed via two PDU sessions. The SMF may send the third indication information to the UE via the AMF based on the second indication information, where the third indication information indicates that a manner of transmission of the first data flow via the plurality of PDU sessions is the aggregation manner. The UE may continue to send the second PDU session establishment request message, where the second PDU session establishment request message includes the indication information indicating the aggregation manner. The AMF may determine, based on the indication information that indicates the aggregation manner and that is in the second PDU session establishment request message, that SMFs of the two PDU sessions are the same. The SMF may determine UPFs of the two PDU sessions based on the indication information that indicates the aggregation manner and that is in the third PDU session establishment request message. The SMF establishes the second PDU session based on a third PDU session establishment request message. In this way, the UPF can aggregate the first PDU session and the second PDU session for use, to avoid a problem that costs of a server are high because the first data flow of which transmission is performed via the first PDU session and the first data flow of which transmission is performed via the second PDU session need to be aggregated on the server.

It should be noted that the PDU session establishment request message in the method 400 may be the first PDU session establishment request message or the second PDU session establishment request message in the method 600 to the method 900.

It should be noted that in FIG. 6A and FIG. 6B to FIG. 9A and FIG. 9B, only two PDU sessions are used as an example for description, and in a scenario in which more PDU sessions are used, this is similar to embodiments in FIG. 6A and FIG. 6B to FIG. 9A and FIG. 9B. To avoid repetition, details are not described.

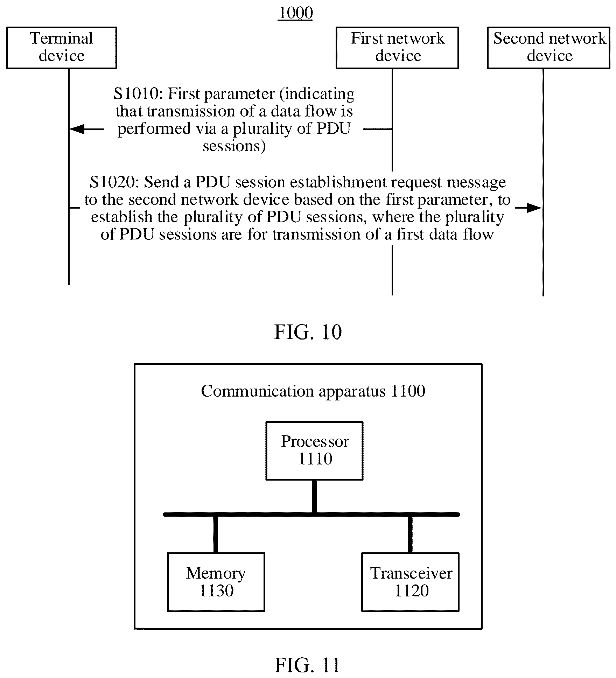

In the foregoing embodiments, when the first network device determines the first parameter, the protocol is considered. In some cases, the first parameter may alternatively be irrelevant to the protocol. The following describes a method 1000 in an embodiment of this application with reference to FIG. 10. The method 1000 includes the following steps.

S1010: A first network device sends a first parameter, and a terminal device receives the first parameter, where the first parameter indicates that transmission of a data flow is performed via a plurality of PDU sessions.

Optionally, S1010 includes: The first network device sends a first route selection policy including the first parameter. Optionally, a first route selection descriptor (route selection descriptor, RSD) in the first route selection policy may include the first parameter.

Optionally, the first parameter further indicates a first manner of transmission of the data flow via the plurality of PDU sessions, the first manner is a switching manner or an aggregation manner, and the plurality of PDU sessions are for transmission of the first data flow in the first manner.

S1020: The terminal device sends a PDU session establishment request message to a second network device based on the first parameter, to establish the plurality of PDU sessions, where the plurality of PDU sessions are for transmission of the first data flow.

Optionally, when the first parameter indicates that transmission of the data flow is performed via the plurality of PDU sessions, S1020 includes: sending the PDU session establishment request message to the second network device, where the PDU session establishment request message includes second indication information, and the second indication information indicates that transmission of the first data flow is performed via the plurality of PDU sessions; the second network device sends a response message of the PDU session establishment request message to the terminal device, where the response message of the PDU session establishment request message includes third indication information, the third indication information indicates the first manner of transmission of the first data flow via the plurality of PDU sessions, and the first manner is the switching manner or the aggregation manner; and the terminal device establishes a plurality of PDU sessions with the second network device based on the third indication information, where the plurality of PDU sessions are for transmission of the first data flow in the first manner. In other words, when the first parameter indicates that transmission of the data flow is performed via the plurality of PDU sessions, the PDU session establishment request message sent by the terminal device to the second network device includes the second indication information. The second network device determines, based on the second indication information, that the terminal device performs transmission of the first data flow via the plurality of PDU sessions. The second network device determines that the first manner is the switching manner or the aggregation manner, and indicates the first manner in the third indication information in the response message of the PDU session establishment request message. The second network device may determine, based on an implementation of the second network device, whether the first manner is the switching manner or the aggregation manner.

Optionally, if the first parameter indicates the first manner of transmission of the data flow via the plurality of PDU sessions, the first manner is the switching manner or the aggregation manner. Optionally, if the first manner is the aggregation manner, the PDU session establishment request message may include indication information indicating the aggregation manner. In this way, the second network device that receives the PDU session establishment request message can aggregate data on the plurality of PDU sessions based on the indication information indicating the aggregation manner. Optionally, if the first manner is the switching manner, the PDU session establishment request message may include or not include indication information indicating the switching manner. The terminal device may switch between a plurality of PDU sessions based on an implementation of the terminal device to perform transmission of the first data flow. Optionally, a quantity of PDU session establishment request messages is equal to a quantity of PDU sessions. One PDU session establishment request message may be used to establish one PDU session, and the terminal device may send a plurality of PDU session establishment request messages to establish a plurality of PDU sessions.

Optionally, if the first manner is the aggregation manner, the communication method further includes: The terminal device may perform transmission of a part of data of the first data flow on a part of the plurality of PDU sessions, and the terminal device may perform transmission of a remaining part of data of the first data flow on a remaining part of the plurality of PDU sessions. In this way, reliability of transmission of the first data flow can be improved. Optionally, if the first manner is the switching manner, transmission of the first data flow is performed by switching between the plurality of PDU sessions based on session quality of the plurality of PDU sessions, so that reliability of transmission of the first data flow can be improved.

Optionally, the first data flow is a data flow corresponding to a first application.

In the method 1000, for descriptions of transmission of the first data flow by the terminal device via the plurality of PDU sessions in the first manner, refer to the foregoing descriptions of the method 400 and the method 600 to the method 900. To avoid repetition, details are not described. Different from the method 400 and the method 600 to the method 900, the first parameter is irrelevant to a protocol in the method 1000.

The foregoing describes the method embodiments provided in this application, and the following describes apparatus embodiments provided in this application. It should be understood that descriptions of the apparatus embodiments correspond to the descriptions of the method embodiments. Therefore, for content that is not described in detail, refer to the method embodiments. For brevity, details are not described herein again.

FIG. 11 shows a communication apparatus 1100 according to an embodiment of this application. The communication apparatus 1100 includes a processor 1110 and a transceiver 1120. The processor 1110 and the transceiver 1120 communicate with each other through an internal connection path, and the processor 1110 is configured to execute instructions, to control the transceiver 1120 to send a signal and/or receive a signal.

Optionally, the communication apparatus 1100 may further include a memory 1130. The memory 1130 communicates with the processor 1110 and the transceiver 1120 through internal connection paths. The memory 1130 is configured to store instructions, and the processor 1110 may execute the instructions stored in the memory 1130. In a possible implementation, the communication apparatus 1100 is configured to implement procedures and operations corresponding to the first network device in the method 400 or the method 1000 or the PCF in the method 500 to the method 900. In a possible implementation, the communication apparatus 1100 is configured to implement procedures and operations corresponding to the terminal device in the method 400 or the method 1000 or the UE in the method 500 to the method 900. In a possible implementation, the communication apparatus 1100 is configured to implement procedures and operations corresponding to the second network device in the method 400 or the method 1000 or the SMF in the method 500 to the method 900. In a possible implementation, the communication apparatus 1100 is configured to implement procedures and operations corresponding to the UPF in the method 500 to the method 900.

It should be understood that the communication apparatus 1100 may be specifically the devices (for example, the first network device, the PCF, the terminal device, or the UE) in the foregoing embodiments, or may be a chip or a chip system. Correspondingly, the transceiver 1120 may be a transceiver circuit of the chip. This is not limited herein. Specifically, the communication apparatus 1100 may be configured to perform operations and/or procedures corresponding to the devices in the foregoing method embodiments. Optionally, the memory 1130 may include a read-only memory and a random access memory, and provide the instructions and data for the processor. A part of the memory may further include a non-volatile random access memory. For example, the memory may further store information of a device type. The processor 1110 may be configured to execute the instructions stored in the memory. In addition, when the processor 1110 executes the instructions stored in the memory, the processor 1110 is configured to perform operations and/or procedures corresponding to the devices in the foregoing method embodiments.

In an implementation process, the operations in the foregoing methods may be completed by using a hardware integrated logical circuit in the processor or instructions in a form of software. The operations in the methods disclosed with reference to embodiments of this application may be directly performed and completed by a hardware processor, or may be performed and completed by using a combination of hardware in the processor and a software module. The software module may be located in a mature storage medium in the art, like a random access memory, a flash memory, a read-only memory, a programmable read-only memory, an electrically erasable programmable memory, or a register. The storage medium is located in the memory. The processor reads information in the memory and completes the operations in the foregoing methods in combination with the hardware of the processor. To avoid repetition, details are not described herein again.

It should be noted that the processor in embodiments of this application may be an integrated circuit chip, and has a signal processing capability. In the implementation process, the operations in the foregoing method embodiments may be completed by using the hardware integrated logical circuit in the processor or instructions in the form of software. The processor may be a general-purpose processor, a digital signal processor (DSP), an application specific integrated circuit (ASIC), a field programmable gate array (FPGA) or another programmable logic device, a discrete gate or a transistor logic device, or a discrete hardware component. The processor may implement or perform the methods, the operations, and logical block diagrams that are disclosed in embodiments of this application. The general-purpose processor may be a microprocessor, or the processor may be any regular processor or the like. The operations in the methods disclosed with reference to embodiments of this application may be directly performed and completed by a hardware decoding processor, or may be performed and completed by using a combination of hardware in the decoding processor and a software module. The software module may be located in a mature storage medium in the art, like a random access memory, a flash memory, a read-only memory, a programmable read-only memory, an electrically erasable programmable memory, or a register. The storage medium is located in the memory. The processor reads the information in the memory and completes the operations in the foregoing methods in combination with the hardware of the processor.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memory of the systems and methods described in this specification includes but is not limited to these and any memory of another suitable type.

According to the methods provided in embodiments of this application, this application further provides a computer program product. The computer program product includes computer program code. When the computer program code is run on a computer, the computer is caused to perform operations or procedures performed by the first network device, the terminal device, the PCF, or the UE in the foregoing method embodiments.

According to the methods provided in embodiments of this application, this application further provides a computer-readable storage medium. The computer-readable storage medium stores program code. When the program code is run on a computer, the computer is caused to perform operations or procedures performed by the first network device, the terminal device, the PCF, or the UE in the foregoing method embodiments.

According to the methods provided in embodiments of this application, this application further provides a communication system. The communication system includes at least two devices of the foregoing first network device, terminal device, or second network device, or includes at least two network elements of the foregoing PCF, UE, AMF, SMF, or UPF.

The foregoing apparatus embodiments completely correspond to the foregoing method embodiments. A corresponding module or unit performs a corresponding operation. For example, a communication unit (a transceiver) performs a receiving operation or a sending operation in the method embodiments, and a processing unit (a processor) may perform an operation other than the sending operation or the receiving operation. A function of a specific unit may be based on a corresponding method embodiment. There may be one or more processors.

In embodiments of this application, the terms and English abbreviations are all examples given for ease of description, and should not constitute any limitation on this application. This application does not exclude a possibility of defining another term that can implement a same or similar function in an existing or a future protocol.

It should be understood that "and/or" in this specification describes an association relationship between associated objects, and indicates that three relationships may exist. For example, A and/or B may indicate the following three cases: A exists alone, both A and B exist, and B exists alone, where A and B may be singular or plural. The character "/" generally indicates an "or" relationship between the associated objects.

In the descriptions of this application, to clearly describe technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

It should be understood that in this application, descriptions similar to "in a case of...", "if...", "when...", "it is assumed that...", and the like may be used interchangeably.

A person of ordinary skill in the art may be aware that the illustrative logical blocks (illustrative logical blocks) and operations described with reference to embodiments disclosed in this specification may be implemented by electronic hardware or a combination of computer software and electronic hardware. Whether these functions are performed by using hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that for convenient and brief description, for a specific operating process of the foregoing systems, apparatuses, and units, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located in one place, or may be distributed on a plurality of network units. A part or all of the units may be selected based on an actual requirement to achieve the objectives of the solutions of embodiments.

In addition, functional units in embodiments of this application may be integrated into one processing unit, each of the units may exist alone physically, or two or more units are integrated into one unit.

In the foregoing embodiments, all or a part of the functions of the function units may be implemented by using software, hardware, firmware, or any combination thereof. When the software is used to implement embodiments, all or a part of embodiments may be implemented in a form of a computer program product. The computer program product includes one or more computer instructions (programs). When the computer program instructions (programs) are loaded and executed on the computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium that can be accessed by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state disk, SSD)), or the like.

When the functions are implemented in a form of a software functional unit and sold or used as an independent product, the functions may be stored in a computer-readable storage medium. Based on such an understanding, the technical solutions of this application essentially, or a part contributing to a conventional technology, or a part of the technical solutions may be embodied in a form of a software product. The computer software product is stored in a storage medium, and includes several instructions for enabling a computer device (which may be a personal computer, a server, a network device, or the like) to perform all or a part of operations of the methods described in embodiments of this application. The foregoing storage medium includes any medium that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, from a first network device, a first route selection parameter of a data flow corresponding to a first protocol;
obtaining a protocol corresponding to a first data flow; and
if the protocol corresponding to the first data flow matches the first protocol, determining, based on the first route selection parameter, a PDU session for transmission of the first data flow, wherein
the first protocol belongs to a transport layer protocol or an application layer protocol.

2. The communication method according to claim 1, wherein the communication method further comprises:
receiving first indication information from the first network device, wherein the first indication information indicates the first protocol.

3. The communication method according to claim 2, wherein the receiving the first indication information from the first network device comprises:
receiving a first route selection policy from the first network device, wherein the first route selection policy comprises the first indication information.

4. The communication method according to any one of claims 1 to 3, wherein the first route selection parameter comprises a first parameter, and the first parameter indicates that transmission of a data flow is performed via a plurality of PDU sessions.

5. The communication method according to claim 4, wherein
the first parameter further indicates a first manner of transmission of the data flow via the plurality of PDU sessions, and the first manner is a switching manner or an aggregation manner; and
the determining, based on the first route selection parameter, the PDU session for transmission of the first data flow comprises:
sending a PDU session establishment request message to a second network device based on the first route selection parameter, to establish a plurality of PDU sessions, wherein the plurality of PDU sessions are for transmission of the first data flow in the first manner.

6. The communication method according to claim 4, wherein the determining, based on the first route selection parameter, the PDU session for transmission of the first data flow comprises:
sending a PDU session establishment request message to a second network device, wherein the PDU session establishment request message comprises second indication information, and the second indication information indicates that transmission of the first data flow is performed via a plurality of PDU sessions;
receiving a response message of the PDU session establishment request message from the second network device, wherein the response message of the PDU session establishment request message comprises third indication information, the third indication information indicates a first manner of transmission of the first data flow via the plurality of PDU sessions, and the first manner is a switching manner or an aggregation manner; and
establishing the plurality of PDU sessions based on the third indication information, wherein the plurality of PDU sessions are for transmission of the first data flow in the first manner.

7. The communication method according to claim 5 or 6, wherein the communication method further comprises:
if the first manner is the switching manner, performing transmission of the first data flow by switching between the plurality of PDU sessions based on session quality of the plurality of PDU sessions; or
if the first manner is the aggregation manner, performing transmission of a part of data of the first data flow on a part of the plurality of PDU sessions, and performing transmission of a remaining part of data of the first data flow on a remaining part of the plurality of PDU sessions.

8. The communication method according to any one of claims 5 to 7, wherein if the first protocol comprises a quick user datagram protocol internet connection QUCI protocol, the first manner is the switching manner.

9. The communication method according to any one of claims 5 to 7, wherein if the first protocol is a datagram protocol UDP or a transmission control protocol TCP, the first manner is the aggregation manner.

10. The communication method according to any one of claims 1 to 9, wherein the first route selection parameter comprises a session and service continuity SSC mode.

11. The communication method according to claim 10, wherein if the first protocol comprises the quick user datagram protocol internet connection QUCI protocol, the SSC mode is a mode 3 or a mode 1.

12. The communication method according to claim 10, wherein if the first protocol is the UDP or the TCP, the SSC mode is a mode 1.

13. The communication method according to any one of claims 1 to 12, wherein the first route selection policy sent by the first network device comprises the first route selection parameter.

14. The communication method according to any one of claims 1 to 13, wherein the first data flow is a data flow corresponding to a first application.

15. A communication method, comprising:
determining a first route selection parameter of a data flow corresponding to a first protocol; and
sending the first route selection parameter, wherein the first route selection parameter is used to determine a PDU session, wherein
the first protocol belongs to a transport layer protocol or an application layer protocol.

16. The communication method according to claim 15, wherein the communication method further comprises:
sending first indication information indicative of the first protocol.

17. The communication method according to claim 16, wherein the sending the first indication information comprises:
sending a first route selection policy comprising the first indication information.

18. The communication method according to any one of claims 15 to 17, wherein the first route selection policy comprises a first parameter, and the first parameter indicates that transmission of a data flow is performed via a plurality of PDU sessions.

19. The communication method according to claim 18, wherein the first parameter further indicates a first manner of transmission of the data flow via the plurality of PDU sessions, and the first manner is a switching manner or an aggregation manner.

20. The communication method according to claim 19, wherein the determining the first route selection parameter of the data flow corresponding to the first protocol comprises:
if the first protocol comprises a quick user datagram protocol internet connection QUCI, determining that the first parameter indicates that the first manner of transmission of the data flow via the plurality of PDU sessions is the switching manner.

21. The communication method according to claim 19, wherein the determining the first route selection parameter of the data flow corresponding to the first protocol comprises:
if the first protocol is a datagram protocol UDP or a transmission control protocol TCP, determining that the first parameter indicates that the first manner of transmission of the data flow via the plurality of PDU sessions is the aggregation manner.

22. The communication method according to any one of claims 15 to 21, wherein the first route selection parameter comprises a session and service continuity SSC mode.

23. The communication method according to claim 22, wherein the determining the first route selection parameter of the data flow corresponding to the first protocol comprises:
if the data flow corresponding to the first protocol has a session and service continuity requirement and the first protocol comprises the QUCI protocol, determining that the SSC mode in the first route selection parameter of the data flow corresponding to the first protocol is a mode 3 or a mode 1.

24. The communication method according to claim 22, wherein the determining the first route selection parameter of the data flow corresponding to the first protocol comprises:
if the first protocol comprises the quick user datagram protocol internet connection QUCI protocol, determining that the SSC mode in the first route selection parameter of the data flow corresponding to the first protocol is a mode 3 or a mode 1.

25. The communication method according to claim 22, wherein the determining the first route selection parameter of the data flow corresponding to the first protocol comprises:
if the data flow corresponding to the first protocol has a session and service continuity requirement and the first protocol is the UDP or the TCP, determining that the SSC mode in the first route selection parameter of the data flow corresponding to the first protocol is a mode 1.

26. The communication method according to claim 22, wherein the determining the first route selection parameter of the data flow corresponding to the first protocol comprises:
if the first protocol is the UDP or the TCP, determining that the SSC mode in the first route selection parameter of the data flow corresponding to the first protocol is a mode 1.

27. The communication method according to any one of claims 15 to 26, wherein the first route selection policy comprises the first route selection parameter.

28. The communication method according to any one of claims 15 to 27, wherein the data flow corresponding to the first protocol is a data flow corresponding to a first application.

29. A communication apparatus, comprising a unit for implementing the communication method according to any one of claims 1 to 28.

30. A communication apparatus, comprising a memory and a processor, wherein the memory is configured to store a computer program; and the processor is configured to cause, when invoking the computer program, the communication apparatus to perform the communication method according to any one of claims 1 to 28.

31. A computer-readable storage medium, wherein the computer-readable storage medium stores a computer program; and when the computer program is run, the communication method according to any one of claims 1 to 28 is implemented.

32. A chip, comprising a processor, wherein the processor is connected to a memory, the memory is configured to store a computer program, and the processor is configured to execute the computer program stored in the memory, to implement the communication method according to any one of claims 1 to 28.

33. A computer program product, wherein when the computer program product runs on a communication apparatus, the communication apparatus is caused to perform the communication method according to any one of claims 1 to 28.
